# EUROPÄISCHE PATENTANMELDUNG

(11) **EP 4 700 513 A1**
(43) Veröffentlichungstag der Anmeldung: **25.02.2026**
(21) Anmeldenummer: 25195793.2
(22) Anmeldetag: 13.08.2025
(51) Int. Cl.: G05B 19/418, G01N 21/90

(54) **VERFAHREN ZUM BETREIBEN EINER BEHÄLTNISBEHANDLUNGSANLAGE UND BEHÄLTNISINSPEKTIONSVORRICHTUNG FÜR EINE BEHÄLTNISBEHANDLUNGSANLAGE**

(30) Priorität: 22.08.2024 DE 102024124077
(71) Anmelder: Krones AG, 93073 Neutraubling (DE)
(72) Erfinder: Hewicker, Alexander, 93073 Neutraubling (DE)
(74) Vertreter: Bittner, Bernhard

(57) **Zusammenfassung**

Verfahren zum Betreiben einer Behältnisbehandlungsanlage zur Behandlung einer Vielzahl von Behältnisteilen für Behältnisse, wobei eine Transporteinrichtung die Vielzahl von Behältnisteilen als Behältnisteil-Strom entlang eines vorgegebenen Transportpfads von wenigstens einer Behandlungseinrichtung der Behältnisbehandlungsanlage zu wenigstens einer weiteren Behandlungseinrichtung der Behältnisbehandlungsanlage transportiert, wobei wenigstens eine Sensoreinrichtung zur Durchführung einer Behältnisinspektionsaufgabe, insbesondere ortsaufgelöste Sensordaten in Bezug auf die Behältnisteile, bevorzugt optisch, erfasst. Erfindungsgemäß wird in Bezug auf die erfassten Sensordaten eine Ablegegröße ermittelt, welche charakteristisch ist für eine Ablege-Anweisung zum Ablegen der erfassten Sensordaten auf einer nicht-flüchtigen Speichereinrichtung, wobei die Ablegegröße basierend auf einer Ähnlichkeitsgröße ermittelt wird, welche für eine Ähnlichkeit der erfassten Sensordaten zu vorgegebenen Referenzdaten charakteristisch ist.

## Beschreibung

Die vorliegende Erfindung bezieht sich auf ein Verfahren zum Betreiben einer Behältnisbehandlungsanlage, eine Behältnisinspektionsvorrichtung für eine Behältnisbehandlungsanlage sowie eine Behältnisbehandlungsanlage.

Bei den Behältnissen handelt es sich bevorzugt um Kunststoffbehältnisse (insbesondere PET-Behältnisse), Behältnisse deren Hauptbestandteil aus Pulpe besteht und/oder Glasbehältnisse und/oder Dosen. Bei den Behältnissen kann es sich dabei um Behältnisse aus der Getränke- und/oder Lebensmittel- und/oder Kosmetikindustrie und/oder Pharmaindustrie handeln. Beispielsweise kann es sich um Dosen oder Flaschen, wie etwa Glasflaschen, Pulpeflaschen und Kunststoffflaschen handeln.

In Behälterbehandlungsanlagen, etwa Behälter-Abfüllanlagen, kommen beispielsweise zur Prozesskontrolle verschiedenste Sensoriken und Bildverarbeitungssysteme zum Einsatz. Für verschiedene Prozessschritte wie Spritzgießen, Behältnisreinigung, Abfüllen, Etikettieren, Verschließen, Einpacken, Umreifen und/oder Schrumpfverpacken erfolgt im Anschluss beispielsweise eine optische Inspektion zur Kontrolle und/oder zur Steuerung oder Regelung eines Prozesses.

Für jeden Prozessschritt werden üblicherweise Kontrollsysteme, meist Bildverarbeitungssysteme, installiert, welche zu konfigurieren und aufwändig zu parametrieren sind. Dies erfordert viel Erfahrung und Fingerspitzengefühl. Zur feinen Anpassung und weiteren Verbesserung werden derzeit Kamerabilder kontrollierter Behältnisse auf einem permanenten Bildspeicher abgelegt.

Üblicherweise werden in derzeitigen Behältnisbehandlungsanlagen die Strategien für die temporäre Bildspeicherung in der Kamera und die permanente Bildspeicherung auf einem Festspeicher anhand unterschiedlicher Kriterien, wie beispielsweise Gut-/ Schlecht-Bewertung oder zuletzt aufgenommenen Bildern gesteuert.

Wenn Bilder mit einem bestimmten neuen Merkmal, Fehler oder Erscheinungsbild gespeichert werden sollen, gibt es nachteilig bei den obig genannten Strategien kein geeignetes Kriterium bzw. keine Keep-Strategie, diese Bilder zu speichern. Vereinfacht gesagt, kann die Maschine nur speichern, was mit einem existierenden Kriterium auswählbar ist. Bei täglich ca. 1.000.000.000 aufgenommenen Bildern in einer Maschine verbietet sich eine manuelle Auswahl und Durchsicht aller Bilder.

Aus der DE 10 2021 133 164 B3 ist ein Verfahren zum Durchführen eines Einstellbetriebs einer Behältnisinspektionsvorrichtung bekannt. Darin erfasst eine Sensoreinrichtung ortsaufgelöste Sensordaten in Bezug auf die zu inspizierenden Behältnisse und eine Echtzeit-Auswertungseinrichtung wertet die ortsaufgelösten Sensordaten der einzelnen inspizierten Behältnisse mithilfe eines einstellbaren Echtzeit-Behältnisinspektions-Modells in Echtzeit aus. Weiter wird eine Vielzahl von ortsaufgelösten Sensordaten auf einer nicht-flüchtigen Speichereinrichtung bereitgestellt. In einem Einstellbetrieb ruft eine Einstelleinrichtung die abgelegte Vielzahl von ortsaufgelösten Sensordaten ab und bewertet auf Grundlage der abgerufenen Vielzahl von ortsaufgelösten Sensordaten ein Test-Behältnisinspektions-Modell.

Der vorliegenden Erfindung liegt die Aufgabe zugrunde, die aus dem Stand der Technik bekannten Nachteile zu überwinden und ein Verfahren zum Betreiben einer Behältnisbehandlungsanlage, eine Behältnisinspektionsvorrichtung für eine Behältnisbehandlungsanlage sowie eine Behältnisbehandlungsanlage bereitzustellen, welche eine Ablege-Strategie für bei der Behältnisinspektion erfasste Sensordaten vorschlägt, welche für eine weitere Verbesserung der Inspektionspräzision wesentliche Sensordaten zum Ablegen auf einer Speichereinrichtung auswählt.

Die Aufgabe wird erfindungsgemäß durch die Gegenstände der unabhängigen Ansprüche gelöst. Vorteilhafte Ausführungsformen und Weiterbildungen der Erfindung sind Gegenstand der Unteransprüche.

Bei einem erfindungsgemäßen Verfahren zum Betreiben einer Behältnisbehandlungsanlage zur Behandlung einer Vielzahl von Behältnisteilen für Behältnisse und bevorzugt für Kunststoffbehältnisse und/oder Flaschen, ist eine Transporteinrichtung vorgesehen, welche die (insbesondere zu behandelnde und/oder behandelte) Vielzahl von Behältnisteilen als Behältnisteil-Strom entlang eines vorgegebenen Transportpfads von wenigstens einer Behandlungseinrichtung der Behältnisbehandlungsanlage zu wenigstens einer weiteren Behandlungseinrichtung der Behältnisbehandlungsanlage transportiert. Bevorzugt umfasst die Behältnisbehandlungsanlage die Transporteinrichtung.

Bei den Behältnissen handelt es sich bevorzugt um Kunststoffbehältnisse (insbesondere PET-Behältnisse), Behältnisse deren Hauptbestandteil aus Pulpe besteht und/oder Glasbehältnisse und/oder Dosen. Bei den Behältnissen kann es sich dabei um Behältnisse aus der Getränke- und/oder Lebensmittel- und/oder Kosmetikindustrie und/oder Pharmaindustrie handeln. Beispielsweise kann es sich um Dosen oder Flaschen, wie etwa Glasflaschen, Pulpeflaschen und Kunststoffflaschen handeln.

Unter einem "Behältnisteil für ein Behältnis" kann auch das Behältnis selbst verstanden werden. So könnte es sich bei dem Behältnisteil etwa um einen Vorformling handeln, aus welchem durch einen Umformvorgang das fertig ausgeformte Behältnis hergestellt wird, oder um das bereits fertig ausgeformte Behältnis handeln.

Bei dem Behältnisteil für ein Behältnis kann es sich auch um eine Ausstattung des Behältnisses, wie ein (bevorzugt wiederverschließbarer) Behältnisverschluss (etwa Drehverschluss oder Kappe), ein (PET- und/oder Kunststoff-)Deckel, ein Etikett, eine (Laser- oder Direkt-druck-)Markierung, ein Füllgut und/oder eine Verpackung des (fertigen) Behältnisses, eine Behältniszusammenstellung oder dergleichen (sowie Kombinationen hiervon) handeln.

So kann es sich beispielsweise bei der Transporteinrichtung um eine Zuführung (etwa eine Zuführschiene, für Behältnisverschlüsse handeln, welche die Behältnisverschlüsse ausgehend von einer Sammeleinrichtung einer Verschließeinrichtung zum Verschließen von Behältnissen zuführt.

Bevorzugt handelt es sich bei dem Behältnisteil um einen von der Transporteinrichtung als (genau eine) Einheit transportablen und (unabhängig von weiteren transportierten Behältnisteilen) transportierten Gegenstand.

Bevorzugt führt die (erste) Behandlungseinrichtung und/oder die (wenigstens eine) weitere Behandlungseinrichtung (insbesondere jeweils) wenigstens einen Behandlungsschritt an dem Behältnisteil (und bevorzugt an dem Behältnis) durch.

Der Behandlungsschritt der (ersten) Behandlungseinrichtung und/oder der (wenigstens einen) weiteren Behandlungseinrichtung kann ausgewählt sein aus einer Gruppe von Behandlungsschritten, welche einen Spritzgießvorgang zum Herstellen eines Spritzgießteils (etwa Kunststoffvorformling), einen Reinigungsvorgang, einen Zerkleinerungsvorgang und/oder Zerteilungsvorgang (etwa im Rahmen eines Recyclingvorgangs), einen Umformvorgang (insbesondere ein (Streck-)Blasformen), einen (Laser-)Markierungsvorgang, einen Individualisierungsvorgang (etwa Anbringen eines QR-Codes), einen Ausleitvorgang (in welchem das Behältnisteil aus dem Behältnisteil-Strom der Behältnisbehandlungsanlage ausgeleitet wird), einen Sortiervorgang (in welchem die Behältnisteile sortenabhängig sortiert werden), einen Füllvorgang, einen Verschließvorgang, einen (insbesondere Direkt-)Druckvorgang, einen Etikettiervorgang, ein Vornehmen einer Laserdekoraktion, einen Vorgang zum Umreifen (eines Behältnisteils und bevorzugt eines Behältnisses), einen Verpackungsvorgang (insbesondere ein Abringen einer Primär- und/oder Sekundärverpackung, etwa Einschweißen mehrerer Behältnisse als Paket und/oder als Gebindeeinheit), insbesondere ein Vornehmen einer Schrumpfverpackung, eine Bestimmung der Zusammensetzung von Stoffen oder Stoffgemischen, etwa der Atmosphäre und/oder Luft in oder an einem Behältnisteil und bevorzugt Behältnis, beispielsweise mittels eines Massenspektrometers und/oder einer Geruchssensoreinrichtung, und dergleichen sowie Kombinationen hiervon umfasst.

Weiterhin erfasst wenigstens eine Sensoreinrichtung (der Behältnisbehandlungsanlage und/oder einer nachfolgend näher beschriebenen Behältnisinspektionsvorrichtung) zur Durchführung einer Behältnisinspektionsaufgabe, bevorzugt während einem Arbeitsbetrieb der Behältnisbehandlungsanlage, insbesondere ortsaufgelöste, Sensordaten (bevorzugt Kamerabilder) in Bezug auf die (zu inspizierenden und/oder transportierten) Behältnisteile.

Bevorzugt transportiert die Transporteinrichtung die Vielzahl (zu behandelnder und/oder behandelter) Behältnisteile (zu dessen Inspektion, um die Behältnisinspektionsaufgabe zu erfüllen) zu der Sensoreinrichtung, welche jeweils, insbesondere ortsaufgelöste, Sensordaten in Bezug auf die transportierten Behältnisteile erfasst. Die Sensoreinrichtung und/oder die die wenigstens eine Sensoreinrichtung umfassende (nachfolgend näher beschriebene) Behältnisinspektionsvorrichtung kann zwischen der Behandlungseinrichtung und der wenigstens einen weiteren Behandlungseinrichtung angeordnet sein.

Bevorzugt wird das (zu inspizierende) Behältnisteil wenigstens bereichsweise und bevorzugt dessen aus wenigstens einer Beobachtungsrichtung beobachtbarer bzw. sichtbarer Behältnisteilbereich in den Sensordaten abgebildet.

Denkbar ist, dass zu jedem zu inspizierenden und/oder zur Sensoreinrichtung transportierten Behältnisteil einzeln bzw. Behältnisteil-individuell Sensordaten erfasst bzw. erhoben werden (in jeweils einem eigenen Erfassungsschritt der Sensoreinrichtung).

Es kann genau eine Sensoreinrichtung vorgesehen sein, welche die zur Durchführung der Behältnisinspektionsaufgabe erforderlichen Sensordaten in Bezug auf die Behältnisteile erfasst. Denkbar ist aber auch, dass hierfür mehrere Sensoreinrichtungen vorgesehen ist, welche beispielsweise die Sensordaten aus mehreren Aufnahmerichtungen in Bezug auf das Behältnisteil erfassen und/oder welche in einem mehrbahnigen Transportbereich jeweils die auf verschiedenen Bahnen transportierten Behältnisteile erfassen.

Bei den Sensordaten handelt es sich bevorzugt um ortsaufgelöste Sensordaten, welche insbesondere eine zu erfassende Eigenschaft (etwa Farbwert und/oder Grauwert und/oder Helligkeitswert) eines Bereichs des Behältnisteils abbilden. Bevorzugt geben die ortsaufgelösten Sensordaten einen Sensordatenverlauf in Abhängigkeit von wenigstens einer räumlichen und/oder geometrischen Koordinate und bevorzugt in Abhängigkeit von wenigstens zwei räumlichen und/oder geometrischen Koordinaten an (oder sind angebbar).

Bei den Sensordaten kann es sich - wie etwa bei den von einer Kamera erfassten Sensordaten - etwa um einen Farbwert und/oder Grauwert und/oder Helligkeitswert handeln.

Bei den von einer LIDAR-Einrichtung erfassten Sensordaten kann es sich um RGB-Werte und/oder Intensitätswerte handeln, welche für jeden erfassten Datenpunkt zusammen mit bzw. in Abhängigkeit von dessen X-, Y- und Z-Positionswert erfasst und abgelegt werden.

Denkbar ist auch, dass es sich bei den Sensordaten um frequenzaufgelöste Sensordaten handelt.

So kann etwa je Sensordatenpunkt wenigstens ein Intensitätswert in Abhängigkeit einer Frequenz der von der Sensoreinrichtung erfassten Strahlung erfasst werden, so dass die Sensordaten einen Sensorwertverlauf in Abhängigkeit einer Frequenz angeben.

Denkbar ist auch, dass es sich bei den Sensordaten um Spektrometer-Sensordaten handelt, welche bevorzugt von einem Massenspektrometer, welches etwa als Geruchssensor verwendet wird, erzeugt werden. Denkbar ist, dass damit etwa eine Zusammensetzung eines Gases und/oder Luft und/oder Luftgemischs, etwa einer Atmosphäre in einem Behältnis analysiert wird. Hier können etwa die erfassten Sensordaten einen Intensitätswertverlauf in Abhängigkeit eines Masse-zu-Ladung-Verhältnisses von in der Atmosphäre enthaltenen Atomen und Molekülen angeben.

Bevorzugt handelt es sich bei der Erfassung der insbesondere ortsaufgelösten Sensordaten um eine optische Erfassung. Bevorzugt handelt es sich bei den ortsaufgelösten Sensordaten um Kamerabilder.

Bevorzugt werden die Sensordaten in Bezug auf die zu inspizierenden Behältnisteile während des Transports dieser jeweils zu erfassenden Behältnisteile mit unveränderter insbesondere nicht reduzierter Transportgeschwindigkeit erfasst, also während sich die Behältnisteile in Bewegung befinden. Zur Erfassung der Sensordaten werden mit anderen Worten die Behältnisteile nicht abgebremst und/oder angehalten. Dies bietet den Vorteil einer hohen Durchlaufgeschwindigkeit und Produktionsgeschwindigkeit der Behältnisbehandlungsanlage.

Zur optischen Erfassung der Sensordaten kann eine Beleuchtung der Behältnisteile und bevorzugt Behältnisse vorgesehen sein, etwa eine Auflicht- und/oder eine Durchlichtbeleuchtung.

Erfindungsgemäß wird (bevorzugt von einer Behältnisinspektionsvorrichtung) in Bezug auf die erfassten, insbesondere ortsaufgelösten, Sensordaten eine Ablegegröße ermittelt (insbesondere in einem Computer-implementierten Verfahrensschritt), welche charakteristisch ist für eine Ablege-Anweisung zum Ablegen der erfassten, insbesondere ortsaufgelösten, Sensordaten auf (wenigstens) einer nicht-flüchtigen Speichereinrichtung.

Bei der Ablegegröße handelt es sich bevorzugt um eine binäre Größe, wobei bevorzugt der eine annehmbare Wert der Ablegegröße angibt, dass die erfassten, insbesondere ortsaufgelösten, Sensordaten auf der nicht-flüchtigen Speichereinrichtung abzulegen sind.

Bevorzugt gibt ein weiterer (bevorzugt der zweiter) von der Ablegegröße annehmbare Wert an, dass die erfassten, insbesondere ortsaufgelösten, Sensordaten nicht auf der nicht-flüchtigen Speichereinrichtung abzulegen sind. Bevorzugt werden in diesem Fall die erfassten, insbesondere ortsaufgelösten Sensordaten, in Folge lediglich temporär abgelegt und beispielsweise nach einem Ablegen von einer (bestimmten) Anzahl weiterer erfassten, insbesondere ortsaufgelösten, Sensordaten von der Speichereinrichtung gelöscht.

Bevorzugt wird durch Zuweisung/Zuordnung eines Werts der Ablegegröße, welcher angibt, dass die erfassten Sensordaten auf der nicht-flüchtigen Speichereinrichtung abzulegen sind ein Ablegen dieser erfassten Sensordaten auf der nicht-flüchtigen Speichereinrichtung ausgelöst und besonders bevorzugt vorgenommen.

Bei der nicht-flüchtigen Speichereinrichtung kann es sich um eine Speichereinrichtung handeln, welche (fester) Bestandteil der wenigstens einen Sensoreinrichtung und/oder der Behältnisinspektionsvorrichtung ist. Denkbar ist, dass es sich bei dieser Speichereinrichtung um einen Ringspeicher handelt, bei welchem bei Erreichen der Speicherkapazität die ältesten Sensordaten überschrieben werden (und somit die abgelegten Sensordaten nur für einen begrenzten Zeitraum zur Verfügung stehen).

Bei der nicht-flüchtigen Speichereinrichtung kann es sich ebenfalls um eine Speichereinrichtung der Behältnisbehandlungsanlage handeln, welche etwa als Festspeicher ausgebildet ist.

Denkbar ist, dass die erfassten Sensordaten zunächst (insbesondere temporär, bevorzugt zunächst ausschließlich temporär) auf einer Speichereinrichtung der Sensoreinrichtung abgelegt werden.

Bevorzugt werden in Abhängigkeit der (ermittelten) Ablegegröße die erfassten, insbesondere ortsaufgelösten, Sensordaten von einer Speichereinrichtung zur lediglich temporären Speicherung der erfassten, insbesondere ortsaufgelösten, Sensordaten (beispielsweise der Speichereinrichtung der Sensoreinrichtung) an eine (bevorzugt nicht-flüchtige) Speichereinrichtung, insbesondere zur permanenten Speicherung, der ermittelten, ortsaufgelösten Sensordaten (bei welcher er sich etwa um einen Festspeicher und/oder eine in Bezug auf die Sensoreinrichtung externe Speichereinrichtung und/oder beispielsweise eine Speichereinrichtung der Behältnisinspektionsvorrichtung und/oder der Behältnisbehandlungsanlage und/oder einer in Bezug auf die Behältnisbehandlungsanlage externen Speichereinrichtung handeln kann) übermittelt.

"Nicht-flüchtig" kann auch heißen, dass die selektierten Bilder bzw. Sensordaten und/oder die auf der nicht-flüchtigen Speichereinrichtung gespeicherten Sensordaten nur über einen gewissen Zeitraum gehalten werden, also beispielsweise nach einer einstellbaren Zeit oder Parametrieraktion (Monteur) gelöscht werden (können). "Nicht-flüchtig" kann auch heißen, dass die Bilder bzw. Sensordaten nicht über das Ausschalten der Maschine hinaus gehalten werden bzw. gespeichert bleiben müssen.

"Nicht-flüchtig" soll auch bedeuten, dass die zu "haltenden" Bilddaten und/oder die abzulegenden Sensordaten im einfachsten Fall für eine Parametrierung zur Verfügung stehen müssen.

Denkbar ist auch, dass zusätzlich oder alternativ unter "nicht-flüchtiger Speichereinrichtung" verstanden wird, dass die zu "haltenden" Bilddaten und/oder die abzulegenden Sensordaten auch erhalten bleiben, wenn die Speichereinrichtung nicht mit Strom versorgt ist.

Erfindungsgemäß wird die Ablegegröße basierend auf einer Ähnlichkeitsgröße ermittelt, welche für eine Ähnlichkeit der erfassten, insbesondere ortsaufgelösten, Sensordaten zu vorgegebenen und/oder vorgebbaren Referenzdaten charakteristisch ist.

Die Referenzdaten sind dabei bevorzugt in einer Speichereinrichtung der Behältnisbehandlungsanlage und besonders bevorzugt der Behältnisinspektionsvorrichtung, welche die Sensoreinrichtung umfasst, abgelegt.

Insbesondere werden die erfassten, insbesondere ortsaufgelösten, Sensordaten mit den Referenzdaten verglichen und aus dem Vergleichsergebnis wird die Ähnlichkeitsgröße ermittelt.

Bevorzugt handelt es sich bei der Ähnlichkeitsgröße um eine nicht diskrete Größe, welche insbesondere nicht nur zwei oder eine endliche (fest vorgegebene) Anzahl an Werten annehmen kann. Bevorzugt handelt es sich bei der Ähnlichkeitsgröße um eine kontinuierliche Größe. Bevorzugt gibt die Ähnlichkeitsgröße einen Ähnlichkeitsgrad an.

Mit anderen Worten wird die Maschine erweitert um eine Keep-Strategie bzw. Bildspeicherfunktion, die im Falle einer als Kamera ausgebildeten Sensoreinrichtung auf Grundlage einer Bildähnlichkeit Bilder in der Kamera und im Festspeicher aufheben kann. Als Referenz kann beispielsweise ein Bild des gesuchten Fehlers bzw. Merkmals verwendet werden.

Insbesondere kann bei einer Vielzahl von, insbesondere ortsaufgelösten, Sensordaten mittels der jeweils in Bezug auf die vorgegebenen Referenzdaten ermittelten Ähnlichkeitsgröße eine Sortierung der Vielzahl von Sensordaten entsprechend ihrer jeweiligen Ähnlichkeit zu den Referenzdaten vorgenommen werden. Es ist also möglich, zwei oder mehrere verschiedene erfasste Sensordaten hinsichtlich ihrer Ähnlichkeit zu den Referenzdaten zu unterscheiden.

Bevorzugt wird eine Sortierung einer (vorgegebenen) Vielzahl von erfassten, insbesondere ortsaufgelösten, Sensordaten entsprechend der jeweiligen zu den Referenzdaten (und bevorzugt zu einer vorgegebenen Vielzahl von Referenzdaten) ermittelten Ähnlichkeitsgröße vorgenommen. Bevorzugt wird die Ablegegröße von Sensordaten der Vielzahl von erfassten, insbesondere ortsaufgelösten, Sensordaten in Abhängigkeit der von diesen Sensordaten bei der Sortierung erzielten Reihenfolge ermittelt.

So kann beispielsweise den fünf Sensordaten, welche im Vergleich zu den übrigen Sensordaten der Vielzahl von erfassten, insbesondere ortsaufgelösten Sensordaten die höchste Ähnlichkeit zu den Referenzdaten, aufweisen und etwa die fünf obersten Plätze der Sortierung erreicht haben, eine Ablegegröße zugeordnet werden, die angibt bzw. dafür charakteristisch ist, dass die Sensordaten auf der nicht-flüchtigen Speichereinrichtung abzulegen sind.

Dies bietet den Vorteil, dass etwa ein bestimmtes Fehlerbild oder Sensordaten in Bezug auf eine in dem Behältnisteil-Strom sehr selten vorkommende Behältnisteilart als Referenzdaten vorgegeben werden kann und automatisch innerhalb einer Vielzahl von erfassten, insbesondere ortsaufgelösten Sensordaten, nach denjenigen erfassten Sensordaten gesucht wird, welche diesem bestimmten Fehlerbild am nächsten kommen.

Dabei kann, etwa von einem Bediener, vorgegeben werden, wie viele der sortierten Sensordaten der (vorgegebenen) zu sortierenden Vielzahl von erfassten, insbesondere ortsaufgelösten, Sensordaten dafür ausgewählt werden sollen, in der nicht-flüchtigen Speichereinrichtung abgelegt zu werden (durch Zuweisung/Zuordnung einer entsprechenden Ablegegröße).

Bei der zu sortierenden Vielzahl von Sensordaten kann es sich um unmittelbar nacheinander erfasste Sensordaten handeln.

Denkbar ist auch, dass es sich bei der zu sortierenden Vielzahl von Sensordaten um (besonders bevorzugt alle) in einem bestimmten, bevorzugt (von einem Bediener) vorgebbaren, Zeitraum erfasste, insbesondere ortsaufgelöste, Sensordaten handelt. Diese zu sortierende Vielzahl von Sensordaten kann dabei zeitgleich in einer Speichereinrichtung abgelegt sein.

Bevorzugt ist die zu sortierende Vielzahl von Sensordaten nicht (zumindest nicht in ihrer Gesamtheit) zeitgleich auf einer (gemeinsamen) Speichereinrichtung abgelegt (insbesondere da bei der Anmelderin eine äußerst hohe Anzahl an Sensordaten täglich erfasst werden, wodurch sehr schnell Speicherkapazitäten erreicht werden). Bevorzugt ist, dass bei Erreichen einer vorgegebenen Anzahl an auf einer Speichereinrichtung abgelegten erfassten Sensordaten der zu sortierenden Vielzahl von Sensordaten und/oder bei Erreichen eines vorgegebenen Speicherbedarfs dieser, bei weiteren Sensordaten der zu sortierenden Vielzahl von Sensordaten die jeweilige Ähnlichkeitsgröße dieser weiteren Sensordaten ermittelt wird und anhand dieser ermittelten Ähnlichkeitsgröße entschieden wird, ob diese weiteren Sensordaten auf der Speichereinrichtung abgelegt werden und stattdessen bereits auf der Speichereinrichtung abgelegte andere Sensordaten der zu sortierenden Vielzahl von Sensordaten gelöscht werden (oder ob die weiteren Sensordaten nicht auf der Speichereinrichtung abgelegt werden und bei der weiteren Sortierung daher nicht mehr berücksichtigt werden).

Ein solches Verfahren bietet den Vorteil, dass durch Verwendung der Ähnlichkeitsgröße stets diejenige vorgegebene Anzahl von erfassten Sensordaten der zu sortierenden Vielzahl von Sensordaten auf der Speichereinrichtung abgelegt ist, welche bei den bisher betrachteten Sensordaten der zu sortierenden Vielzahl von Sensordaten am ehesten den (vorgegebenen) Sortierkriterien bzw. Ablegekriterien entsprechen.

Ein weiterer Vorteil ergibt sich daraus, dass dieses Sortierverfahren im laufenden Arbeitsbetrieb anwendbar ist. So kann sukzessive mit der Sortierung entsprechend der Ähnlichkeitsgröße in Bezug auf die Referenzdaten begonnen werden, sobald die jeweiligen Sensordaten erfasst sind. Es muss nicht gewartet werden, bis tatsächlich alle Sensordaten der zu sortierenden Vielzahl von Sensordaten vorliegen.

Bei einem bevorzugten Verfahren handelt es sich bei den Referenzdaten um, bevorzugt von einer Sensoreinrichtung, erfasste, insbesondere ortsaufgelöste, Referenz-Sensordaten. Bei der Sensoreinrichtung kann es sich dabei um diejenige Sensoreinrichtung handeln, welche die, insbesondere ortsaufgelösten, Sensordaten erfasst (in Bezug auf welche die Ablegegröße zu ermitteln ist bzw. ermittelt wird).

Zusätzlich oder alternativ kann es sich um eine von der die, insbesondere ortsaufgelöste, Sensordaten erfassende Sensoreinrichtung (der Behältnisbehandlungsanlage) verschiedene (etwa baugleiche) Sensoreinrichtung handeln.

So könnten etwa von einer baugleichen Sensoreinrichtung einer verschiedenen Behältnisbehandlungsanlage erfasste Sensordaten als Referenz-Sensordaten verwendet werden. Dies bietet den Vorteil, dass etwa überprüft werden kann, ob in der verschiedenen Behältnisbehandlungsanlage entdeckte, sehr selten auftretende Defekte oder sich aus einer Störung in der Behältnisbehandlungsanlage ergebende Merkmale in dem behandelten Behältnisteil auch in der betrachteten Behältnisbehandlungsanlage auftreten.

Zusätzlich oder alternativ kann es sich bei den Referenz-Sensordaten um manuell und/oder durch Bildverarbeitungsverfahren (bevorzugt automatisch) veränderte (von einer Sensoreinrichtung) erfasste, insbesondere ortsaufgelöste, Sensordaten handelt. So könnten etwa Sensordaten derart (insbesondere manuell) verändert werden, dass diese zusätzlich (insbesondere vorgegebene) Defekte aufweisen. Auf diese Weise kann überprüft werden, ob die von der Sensoreinrichtung der Behältnisbehandlungsanlage erfassten Sensordaten gleiche oder ähnliche Defekte zeigen.

Denkbar ist auch, dass die Referenz-Sensordaten mittels eines Kl-basierten Referenz-Sensordaten-Erzeugungs-Modell (maschinellen Lernens) erzeugt werden, welches beispielsweise mit einer Vielzahl vorliegender Sensordaten zu Behältnisteilen mit erkannter Defektart (und mit einer Vielzahl vorliegender Sensordaten zu defektfreien Behältnisteilen) zur Erzeugung von Defekt-behafteten Sensordaten trainiert wurde.

Denkbar wäre auch, dass - etwa im Falle einer neu zu integrierenden Sorte von Behältnisteilen - als Referenzdaten Daten, insbesondere erfasste Sensordaten, verwendet werden, welche etwa von einem Entwickler der neuen Sorte von Behältnisteilen bereitgestellt werden (etwa als Ergebnis einer Simulation oder als Sensordaten, welche mittels einer in Bezug auf die Behältnisbehandlungsanlage externen Sensoreinrichtung (eines Dritten) erfasst wurden).

Bei einem weiter bevorzugten Verfahren ist die Ähnlichkeitsgröße charakteristisch für eine Ähnlichkeit der erfassten, insbesondere ortsaufgelösten, Sensordaten zu einer vorgegebenen und/oder vorgebbaren Vielzahl von, insbesondere ortsaufgelösten, Referenz-Sensordaten. Es kann also auch eine Ähnlichkeitsgröße betrachtet werden, die eine Ähnlichkeit zu mehreren Referenz-Sensordaten angibt oder hierfür charakteristisch ist.

Beispielsweise kann als Ähnlichkeitsgröße, welche charakteristisch ist für die Ähnlichkeit der erfassten, insbesondere ortsaufgelöste, Sensordaten zu einer vorgegebenen und/oder vorgebbaren Vielzahl von, insbesondere ortsaufgelösten, Referenz-Sensordaten, eine maximale oder minimale Ähnlichkeitsgröße aller Ähnlichkeitsgrößen, welche sich in Bezug auf jeweils genau eine der Referenz-Sensordaten der Vielzahl von Referenz-Sensordaten ergeben, gewählt werden.

Die Ermittlung einer Ähnlichkeitsgröße in Bezug auf eine Vielzahl von Referenz-Sensordaten kann etwa beispielsweise dazu verwendet werden, aus einer Vielzahl erfassten Sensordaten diejenigen auszuwählen bzw. abzulegen, welche eine möglichst geringe Ähnlichkeit zu den vorgegebenen Referenz-Sensordaten (beispielsweise zu Behältnisteilen mit, insbesondere allen bisher, bekannten Defekten und fehlerfreien Behältnisteilen) aufweisen, um etwa neue bisher unbekannte Defektarten zu entdecken.

Bei einem weiter bevorzugten Verfahren werden die Referenzdaten, bevorzugt die insbesondere ortsaufgelösten Referenz-Sensordaten und/oder die Vielzahl von insbesondere ortsaufgelösten Referenz-Sensordaten, von einem Bediener der Behältnisbehandlungsanlage, bevorzugt mittels einer Mensch-Maschinen-Schnittstelle der Behältnisbehandlungsanlage, vorgegeben. Dies bietet den Vorteil, dass ein Bediener, beispielsweise mittels einer (etwa als Touch-Display ausgebildeten) Eingabeeinrichtung (der Behältnisbehandlungsanlage) dem Bediener (etwa von der Inspektionsvorrichtung und/oder der Behältnisbehandlungseinrichtung), insbesondere durch Anzeigen mittels einer Anzeigeeinrichtung) vorgeschlagene erfasste Sensordaten als Referenz-Sensordaten auswählen kann.

Denkbar ist aber auch, dass der Bediener über die Mensch-Maschine-Schnittstelle der Behältnisinspektionsvorrichtung und/oder der Behältnisbehandlungsanlage die Referenzdaten übermitteln kann, in Bezug auf welche die Ähnlichkeitsgröße zu ermitteln ist. Auf diese Weise können auf benutzerfreundliche Weise Referenzdaten festgelegt werden.

Bei einem weiter bevorzugten Verfahren wird in Bezug auf die erfassten, insbesondere ortsaufgelösten, Sensordaten eine Ausleitgröße ermittelt, welche für eine Ausleitanweisung zum Ausleiten des zugehörigen Behältnisteils aus dem Behältnisteil-Strom charakteristisch ist.

Bevorzugt wird in Abhängigkeit der Ausleitgröße ermittelt, ob eine Ausleitung des Behältnisteils aus dem Behältnisteil-Strom vorgenommen wird. Bei entsprechender Ausleitgröße, die eine positive Ausleitanweisung zum Ausleiten des zugehörigen Behältnisteils aus dem Behältnisteil-Strom angibt, wird bevorzugt das zugehörige Behältnisteil von einer Ausleiteinrichtung der Behältnisbehandlungsanlage aus dem Behältnisteil-Strom (automatisch) ausgeleitet.

Die Ermittlung der Ausleitgröße kann dabei von der Behältnisinspektionsvorrichtung vorgenommen werden (in einem Computer-implementierten Verfahrensschritt). Denkbar ist aber auch, dass eine hiervon separate, insbesondere Prozessor-basierte, Ausleitentscheidungseinrichtung (insbesondere als Teil der Behältnisbehandlungsanlage) vorgesehen ist.

Insbesondere handelt es sich bei der Ähnlichkeitsgröße nicht um eine zur Ausleitgröße korrespondierende Größe, so dass etwa nicht alle Sensordaten in Bezug auf auszuleitende Behältnisteile abgelegt werden.

Bevorzugt wird die Ähnlichkeitsgröße unabhängig von der getroffenen Ausleitentscheidung ermittelt und/oder bei der Ermittlung der Ähnlichkeitsgröße wird die Ausleitgröße nicht berücksichtigt (bevorzugt auch umgekehrt).

Insbesondere wird die Ablegegröße nicht in Abhängigkeit von einer oder mehrerer ermittelter Ausleitgrößen ermittelt. Es werden also nicht alle Sensordaten in Bezug auf auszuleitende Behältnisteile sowie die jeweils nächstfolgend erfassten Sensordaten abgelegt, sondern die Ablegegröße wird ausschließlich basierend auf wenigstens einer ermittelten Ähnlichkeitsgrößen oder mehreren ermittelten Ähnlichkeitsgrößen ermittelt.

Wesentlich ist insbesondere bei dem vorgeschlagenen Verfahren, dass die Ermittlung der Ablegegröße nicht ausschließlich davon abhängt, ob das Behältnisteil auszuleiten ist. Mit anderen Worten ist die Speicherstrategie unabhängig vom gewählten bzw. vorgegebenen Ausleitkriterium.

Bei einem weiter bevorzugten Verfahren werden als Referenz-Sensordaten in Bezug auf wenigstens ein ausgeleitetes und/oder auszuleitendes Behältnisteil erfasste, insbesondere ortsaufgelöste, Sensordaten verwendet. Dies bietet den Vorteil, dass auch diesen Referenz-Sensordaten ähnliche erfasste Sensordaten in Bezug auf nicht-ausgeleitete Behältnisteile von einer solchen Speicherstrategie erfasst werden. Hierdurch kann überprüft werden, ob die vorgegebenen Ausleitkriterien korrekt sind oder weiter angepasst werden sollten.

Bei einem weiter bevorzugten Verfahren wird eine für eine positive Ablege-Anweisung charakteristische Ablegegröße ermittelt, sofern eine vergleichsweise hohe Ähnlichkeit der erfassten, insbesondere ortsaufgelösten, Sensordaten zu vorgegebenen und/oder vorgebbaren Referenzdaten ermittelt ist und/oder wird. Dies kann insbesondere vorteilhaft sein, um etwa in dem Behältnisteil-Strom selten auftretende Sorten von Behältnisteilen oder, wie obig beschrieben, Sensordaten zu Behältnisteilen mit ähnlichen Defekten oder Besonderheiten zu ermitteln (und abzulegen).

Bei einem weiter bevorzugten Verfahren ist eine Vielzahl von Referenz-Sensordaten vorgegeben und eine für eine positive Ablege-Anweisung charakteristische Ablegegröße wird ermittelt, sofern eine vergleichsweise geringe Ähnlichkeit der erfassten, insbesondere ortsaufgelösten, Sensordaten zu der vorgegebenen Vielzahl von Referenz-Sensordaten ermittelt ist und/oder wird. Dies bietet im Vergleich zu den aus dem Stand der Technik bekannten Verfahren die sehr vorteilhafte Möglichkeit, sogenannte "Blind spots" zu entdecken, also bisher noch unentdeckte Merkmale oder Defekte von Behältnisteilen. Da diese noch nicht bekannt sind, weisen diese zu allen bekannten Sensordaten, welche in der vorgegebenen Vielzahl von Referenz-Sensordaten abgebildet sind, eine geringere Ähnlichkeit auf. Dies kann verwendet werden, um etwa Behandlungsprozesse weiter zu verbessern, fein-einzustellen oder etwa eine auftretende Alterung oder Störung in der Behältnisbehandlungsanlage zu entdecken.

Bei einem weiter bevorzugten Verfahren umfasst die vorgegebene Vielzahl von Referenz-Sensordaten sowohl Referenz-Sensordaten in Bezug auf aus dem Behältnisteil-Strom auszuleitende Behältnisteile als auch in Bezug auf aus dem Behältnisteil-Strom nicht-auszuleitende Behältnisteile. Dies ist insbesondere vorteilhaft, wenn - wie obig beschrieben - etwa bisher nicht bekannte Defekte bzw. Merkmale an Behältnisteilen entdeckt werden sollen.

Bei einem weiter bevorzugten Verfahren ist (der Behältnisbehandlungsanlage und/oder der Behältnisinspektionsvorrichtung) ein Satz von Behältnisteil-Merkmalen vorgegeben, auf Grundlage welchem die Ähnlichkeitsgröße ermittelt wird. Bevorzugt ist dieser Satz von Behältnisteil-Merkmalen auf einer Speichereinrichtung der Behältnisbehandlungsanlage und/oder der Behältnisinspektionsvorrichtung abgelegt. Bevorzugt wird dieser Satz von Behältnisteil-Merkmalen an die Behältnisbehandlungsanlage und/oder an die Behältnisinspektionsvorrichtung (insbesondere von einer externen Speichereinrichtung und/oder einem externen Server) übermittelt.

Bevorzugt kann auf den Satz von Behältnisteil-Merkmalen zugegriffen werden, insbesondere auch auf die einzelnen Behältnisteil-Merkmale des Satzes von Behältnisteil-Merkmalen. Der Satz von Behältnisteil-Merkmalen sind also nicht implizit in einem Algorithmus zur Bildauswertung (quasi als "Black Box") intrinsisch enthalten, sondern sind so abgelegt, dass auf diese eigenständig und separat zugegriffen werden kann. Besonders bevorzugt kann der Satz von Behältnisteil-Merkmalen auch (insbesondere unabhängig von weiteren Software-Bausteinen) separat ausgetauscht werden. Denkbar ist auch, dass dieser Satz von Behältnisteil-Merkmalen nur für sich genommen ausgegeben und/oder übermittelt werden kann.

Bei einem weiter bevorzugten Verfahren handelt es sich bei dem Satz von Behältnisteil-Merkmalen um einen, im Rahmen eines - in Bezug auf eine Trainings-Behältnisinspektionsaufgabe - durchgeführten maschinellen Lernverfahrens automatisch erhaltenen Satz von (insbesondere von einem neuronalen Netz) extrahierten Behältnisteil-Merkmalen.

Dabei ist bevorzugt die Trainings-Behältnisinspektionsaufgabe von der Behältnisinspektionsaufgabe verschieden. Die Behältnisteil-Merkmale werden bevorzugt bei einem maschinellen Lernverfahren bzw. bei Vornahme eines maschinellen Lernverfahrens extrahiert, welches in Bezug auf eine Trainings-Behältnisinspektionsaufgabe durchgeführt wird. Mit der Durchführung des maschinellen Lernverfahrens soll ein (trainierter) Algorithmus bzw. ein (trainiertes) Modell (maschinellen Lernens) erhalten werden, welches zur Erfüllung bzw. zur Durchführung der Trainings-Behältnisinspektionsaufgabe dient.

Bevorzugt handelt es sich bei dem Satz von extrahierten Behältnisteil-Merkmalen um einen, im Rahmen des in Bezug auf die Trainings-Behältnisinspektionsaufgabe durchgeführten maschinellen Lernverfahrens (automatisch) extrahierten Satz von (extrahierten) Behältnisteil-Merkmalen.

Bei den extrahierten Behältnisteil-Merkmalen handelt es sich dabei insbesondere nicht um vorgegebene Merkmale, auch nicht um eine Auswahl (etwa von einem Nutzer) vorgegebener Merkmale. Bei den extrahierten Behältnisteil-Merkmalen handelt es sich insbesondere um abstrakte Merkmale, welche etwa einen Hell-Dunkel-Kontrast, eine für eine Häufigkeit von geraden Linien charakteristische Größe (etwa wie viele gerade Linien), eine Helligkeit oder einen Helligkeitsverlauf, Formen von Kontur(-Linien) und/oder Begrenzungslinien, Ecken, Formen, Anzahlen von Ecken, Krümmungen, Kombinationen hiervon und dergleichen angeben oder hierfür charakteristisch sind.

Bevorzugt sind die (insbesondere alle) Behältnisteil-Merkmale automatisch, bevorzugt im Rahmen des maschinellen Lernverfahrens, erzeugt (und insbesondere nicht ausgewählt).

Bevorzugt wird der Satz extrahierter Behältnisteil-Merkmale nicht angepasst und/oder verändert, auch nicht bei einer Festlegung einer (neuen und/oder weiteren und/oder anzupassenden) Behältnisinspektionsaufgabe und/oder bei dem Vorgeben neuer/geänderter Referenzdaten bzw. Referenz-Sensordaten.

Denkbar ist, dass eine Anzahl der Behältnisteil-Merkmale des Satzes extrahierter bzw. zu extrahierenden Behältnisteil-Merkmalen, etwa von einem Nutzer der Behältnisbehandlungsanlage, vorgegeben wird und/oder ist. Bevorzugt wird die vorgegebene Anzahl der Behältnisteil-Merkmale bei der Ermittlung des Satzes zu extrahierender Behältnisteil-Merkmale berücksichtigt. Diese vorgegebene Anzahl der Behältnisteil-Merkmale kann etwa von dem Nutzer der Behältnisbehandlungsanlage an einen externen Server, welcher die Ermittlung des Satzes zu extrahierender Behältnisteil-Merkmale durchführt, übermittelt werden. Denkbar ist aber auch, dass die Anzahl der Behältnisteil-Merkmale von einem Hersteller der Behältnisbehandlungsanlage vorgegeben ist/wird und insbesondere durch die Behältnisbehandlungsanlage (oder von einem Bediener dieser) nicht beeinflussbar ist.

Mit Hilfe der Al-basierten Ähnlichkeitsmetrik kann die Ähnlichkeit zum Referenzbild bzw. den Referenz-Sensordaten bestimmt werden. Aufgehoben und gespeichert werden bevorzugt nur ähnliche Bilder bzw. erfasste Sensordaten.

Dies bietet den Vorteil, dass gezielt Bilder mit einem bestimmten Merkmal, Fehler oder Erscheinungsbild gesammelt werden können. Reklamiert der Kunde die Nicht-Erkennung eines Behälters, können gezielt Bilder von ähnlichen Behältern gesammelt werden und in die Verbesserung der Erkennung einfließen.

Beispielswese kann die Sammlung von Trainingsbildern für Al-Anwendungen so zielgerichtet und effizient erfolgen.

Bevorzugt kann auf Grundlage von vorgegebenen Referenz-Sensordaten und/oder einer Vielzahl von Referenz-Sensordaten ein Trainingsdatensatz zum Trainieren eines Erkennungsmodell maschinellen Lernens zum Erkennung von Defekten und/oder Sorten von Behältnisteilen erzeugt werden.

Bevorzugt handelt es sich bei der Trainings-Behältnisinspektionsaufgabe um eine von der Behältnisinspektionsaufgabe verschiedene Trainings-Behältnisinspektionsaufgabe. Die aufwändig zu trainierende Merkmalsextraktion, bevorzugt mit Hilfe eines neuronalen Netzes, wird auf diese Weise bevorzugt wiederverwendet, und braucht deshalb nicht mehr angepasst werden. Denkbar wäre aber auch, dass es sich bei der Trainings-Behältnisinspektionsaufgabe um die durchzuführende Behältnisinspektionsaufgabe handelt.

Bei einem weiter bevorzugten Verfahren handelt es sich bei dem Satz von Behältnisteil-Merkmalen um einen im Rahmen eines überwachten Lernverfahrens Satz von extrahierten Behältnisteil-Merkmalen. Bevorzugt wird zur Durchführung des überwachten Lernverfahrens ein Satz von Trainingsdaten verwendet, welcher Sensordaten in Bezug auf Behältnisteile umfasst, welche mit einem in dem jeweiligen Fall zu erhaltenden Inspektionsergebnis der vorgegebenen Trainings-Behältnisinspektionsaufgabe gelabelt bzw. gekennzeichnet sind.

Bei einem weiter bevorzugten Verfahren handelt es sich bei dem überwachten Lernverfahren um einen K-nächste-Nachbarn-Algorithmus (englisch: "K nearest neighbour"-Algorithmus, auch abgekürzt als "k-NN" oder "KNN"). Bei diesem handelt es sich vorteilhaft um einen leicht an neu hinzugefügte Trainingsmuster anpassbaren und einfachen Algorithmus. Der K-nächste-Nachbarn-Algorithmus benötigt lediglich einen k-Wert und eine Distanzmetrik (Abstandsmetrik), was im Vergleich zu anderen Algorithmen im maschinellen Lernen wenig ist.

Bei einem weiter bevorzugten Verfahren wird (als Lernverfahren) ein traditioneller machine Learning Algorithmus (Maschinenlern-Algorithmus), wie beispielsweise Decision Trees (Decision Tree Learning, dt.: "Entscheidungsbaum-Lernen", wobei ein Entscheidungsbaum ein nichtparametrischer, überwachter Lernalgorithmus mit bevorzugt einer hierarchischen, baumartigen Struktur ist, der beispielsweise sowohl für Klassifizierungs- als auch für Regressionsaufgaben verwendet wird), Random Forests (deutsch: Zufallswald) oder Random Decision Forest, Logistic Regression (dt. logistische Regression), k-Means Clustering, Support Vector Machines (Abkürzung SVM, nicht-gebräuchliche dt. Übersetzung: "Stützvektormaschine" oder Stützvektormethode) verwendet.

Bei einem weiter bevorzugten Verfahren ist bzw. wird durch den bereitgestellten Satz von extrahierten Behältnisteil-Merkmalen ein Merkmalsraum aufgespannt. Mit anderen Worten kann ein Merkmalsraum gebildet werden, welcher durch den bereitgestellten Satz von extrahierten Behältnisteil-Merkmalen aufgespannt wird/ist.

Bevorzugt wird eine Distanzmetrik (Abstandsmetrik) in Bezug auf den Merkmalsraum bereitgestellt.

Bevorzugt wird die Ähnlichkeitsgröße mittels der Distanzmetrik (Abstandsmetrik) ermittelt. Dabei werden bevorzugt die, insbesondere ortsaufgelösten, Sensordaten und/oder die Referenz-Sensordaten jeweils in dem Merkmalsraum (als Merkmals-Vektor) dargestellt. Ein Abstand zwischen diesen beiden Merkmalsvektoren wird bevorzugt mittels der Distanzmetrik (Abstandsmetrik) ermittelt. Dieser Abstand oder eine hierfür charakteristische Größe wird bevorzugt als Ähnlichkeitsgröße zwischen den erfassten, insbesondere ortsaufgelösten, Sensordaten und den Referenz-Sensordaten verwendet.

Bei den Referenzdaten könnte es sich beispielsweise bereits um eine Darstellung von (Referenz-)Sensordaten im Merkmalsraum handeln. Die Referenzdaten könnten also beispielsweise bereits ein Merkmals-Vektor sein (oder hierfür charakteristisch sein). Bereits als Merkmals-Vektor angegebene (vorgegebene) Referenzdaten bieten den Vorteil einer deutlich geringeren Datengröße.

Mit anderen Worten wird bevorzugt eine Distanzmetrik (Abstandsmetrik) in Bezug auf den Merkmalsraum bereitgestellt, wobei zusätzlich oder alternativ eine Echtzeit-Auswertungseinrichtung die Distanzmetrik (Abstandsmetrik) als Ähnlichkeitsmaß zwischen, insbesondere ortsaufgelösten, Sensordaten verschiedener Behältnisteile und bevorzugt verschiedener Behältnisse und/oder als Ähnlichkeitsmaß zwischen erfassten Sensordaten und (etwa auch im Rahmen einer Festlegung der Behältnisinspektionsaufgabe vorgegebener) Referenz-Sensordaten verwendet.

Bevorzugt wird (im Rahmen der Durchführung der Behältnisinspektionsaufgabe) eine Ähnlichkeit zwischen erfassten, insbesondere ortsaufgelösten, Sensordaten eines Behältnisteils mit denjenigen eines anderen Behältnisteils (etwa als Referenz-Sensordaten vorgegeben) mittels der Distanzmetrik beurteilt.

Bevorzugt wird zu allen erfassten (insbesondere ortsaufgelösten) Sensordaten, also beispielsweise für jedes aufgenommene Kamerabild, basierend auf dem Satz von extrahierten Behältnisteil-Merkmalen ein Merkmalsvektor erstellt. Bei dem Merkmalsvektor kann es sich beispielsweise um einen 256-dimensionalen Vektor handeln.

Bevorzugt weist der Merkmalsvektor höchstens 512 Dimensionen, bevorzugt höchstens 256 Dimensionen und besonders bevorzugt höchstens 128 Dimensionen auf. Bevorzugt weist der Merkmalsvektor mindestens 16, bevorzugt mindestens 32, bevorzugt mindestens 64 und besonders bevorzugt mindestens 128 Dimensionen auf. Grundsätzlich könnten aber auch Merkmalsvektoren mit mehr als 512 Dimensionen bzw. ein Merkmalsraum entsprechend höherer Dimensionalität verwendet werden.

Bevorzugt kann (insbesondere etwa auch im Rahmen der Durchführung der Behältnisinspektionsaufgabe) mittels der Distanzmetrik der Abstand des Merkmalsvektors von in Bezug auf ein erstes Behältnisteil erfassten Sensordaten und dem Merkmalsvektor von den in Bezug auf ein weiteres Behältnisteil erfassten Sensordaten ermittelt werden.

Bevorzugt kann im Rahmen der Durchführung der Behältnisinspektionsaufgabe mittels der Distanzmetrik der Abstand des Merkmalsvektors von in Bezug auf ein erstes Behältnisteil erfassten Sensordaten und einem zu Referenz-Sensordaten ermittelten Merkmalsvektor ermittelt werden.

Auf diese Weise können mittels der Distanzmetrik die Merkmalsvektoren (und damit die entsprechenden erfassten Sensordaten) ermittelt werden, welche am ähnlichsten zu einem vorgegebenen Merkmalsvektor waren/sind.

Bevorzugt werden Merkmalsvektoren (und damit die entsprechend erfassten Sensordaten) mit in Bezug auf die vorgegebene Distanzmetrik möglichst geringem Abstand zu einem vorgegebenen Merkmalsvektor ermittelt.

Denkbar ist aber auch, dass derjenige Merkmalsvektor oder diejenigen Merkmalsvektoren (und damit die entsprechend erfassten Sensordaten) ermittelt werden, welche eine in Bezug auf die vorgegebene Distanzmetrik einen möglichst hohen (bzw. den größten) Abstand zu vorgegebenen Merkmalsvektoren und/oder zu den Merkmalsvektoren bisher erfasster (oder in einem bestimmten Zeitraum) Sensordaten und/oder durchschnittlichen und/oder häufiger Merkmalsvektoren aufweisen. Auf diese Weise ist es möglich, sehr selten auftretende Sensordaten (etwa mit einem sehr selten auftretenden Defekt und/oder mit einer selten auftretenden Behältnisteilsorte) zu identifizieren.

Dabei wird bevorzugt die Distanzmetrik als Ähnlichkeitsmaß zur Beurteilung der Ähnlichkeit zwischen den erfassten, insbesondere ortsaufgelösten, Sensordaten und den Referenzdaten, insbesondere den Referenz-Sensordaten, zur Ermittlung der Ähnlichkeitsgröße verwendet.

Bei einem weiter bevorzugten Verfahren wird als Distanzmetrik eine euklidische Metrik und/oder eine Kosinus-Ähnlichkeit in dem Merkmalsraum verwendet. Die Kosinus-Ähnlichkeit (im engl. auch bekannt als "Cosine Similarity" oder "Cosine Distance") ist ein Maß für die Ähnlichkeit zweier Vektoren, bei welcher der Kosinus des Winkels zwischen beiden Vektoren bestimmt wird. Die Kosinus-Ähnlichkeit kann insbesondere als Maß verstanden werden, wie ausgeprägt zwei Vektoren in die gleiche Richtung zeigen. Die Kosinus-Ähnlichkeit zwischen zwei Vektoren a und b kann insbesondere berechnet werden aus dem Standardskalarprodukt aus den Vektoren a und b, dividiert durch die euklidische Norm aus a und die euklidische Norm aus b, also: Kosinus-Ähnlichkeit = (**a** · **b**)/(∥**a**∥ ∥**b**∥).

Ein mit der Distanzmetrik erhaltener (vergleichsweise) geringer Abstand zwischen zwei Merkmalsvektoren (im Merkmalsraum) wird bevorzugt als geringe Ähnlichkeit zwischen den beiden, den jeweiligen Merkmalsvektoren entsprechenden Sensordaten angesehen. Umgekehrt wird bevorzugt ein mit der Distanzmetrik erhaltener (vergleichsweise) großer Abstand zwischen zwei Merkmalsvektoren (im Merkmalsraum) als hohe Ähnlichkeit zwischen den beiden, den jeweiligen Merkmalsvektoren entsprechenden Sensordaten angesehen.

Bei einem weiter bevorzugten Verfahren handelt es sich bei der Behältnisinspektionsaufgabe um eine Klassifikationsaufgabe, welche ausgewählt ist aus einer Gruppe von Klassifikationsaufgaben, welche eine (bevorzugt binäre) Klassifikation in defekte und/oder defektfreie Behältnisteile und bevorzugt Behältnisse (gute / schlechte Behältnisse), eine Erkennung und/oder Klassifikation von Defektarten des Behältnisteils und bevorzugt des Behältnisses, eine Erkennung und/oder Klassifikation von verschiedenen Sorten des Behältnisteils und bevorzugt des Behältnisses (etwa, beispielsweise zehn, verschiedene Flaschentypen), eine Erkennung und/oder Klassifikation einer Kontur und/oder Farbe des Behältnisteils und bevorzugt des Behältnisses, eine Erkennung und/oder Klassifikation einer fehlerfreien und/oder fehlerbehafteten Durchführung wenigstens eines, an dem inspizierten Behältnisteil, insbesondere durch die (erste) Behandlungseinrichtung, vorgenommenen Behandlungsschritts, eine Identifizierung in dem Behältnisteil-Strom vergleichsweise selten auftretender Behältnisteil-Sorten und/oder Defektarten (selten meint insbesondere weniger als 1/1000), eine Etikettenkontrolle, eine Füllhöhenkontrolle, eine Überprüfung eines Schäumungsverhaltens einer Flüssigkeit in einem Behältnis, eine Erkennung eines Haarrisses und/oder Mündungsbruchs eines Behältnisses und/oder Bruchs in einem Bodenbereich des Behältnisses, eine Erkennung von in oder an dem Behältnisteil und/oder Behältnis angeordneten oder befindlichen Fremdpartikeln, und dergleichen sowie Kombinationen hiervon umfasst.

Bevorzugt handelt es sich bei dem Arbeitsbetrieb um einen laufenden (Produktions-)Betrieb der Behältnisinspektionsvorrichtung und/oder einen laufenden (Produktions-)Betrieb einer Behältnisbehandlungsanlage wie etwa einer Behältnisabfüllanlage, welche die Behältnisinspektionsvorrichtung aufweist. Insbesondere kann es sich bei dem Arbeitsbetrieb um einen Produktionsbetrieb handeln. Insbesondere handelt es sich bei dem Arbeitsbetrieb nicht um einen Testbetrieb und/oder Wartungsbetrieb und/oder Einstellbetrieb mit etwa gegenüber einer Transportgeschwindigkeit in einem Arbeitsbetrieb verringerten Transportgeschwindigkeit der Behältnisse bzw. Behältnisteile (bei ihrem Durchlauf durch die Behältnisinspektionsvorrichtung).

Bevorzugt ist die Sensoreinrichtung ausgewählt aus einer Gruppe, die eine Bildaufnahmeeinrichtung, etwa eine Kamera (bevorzugt Schwarz-weiß und/oder farbig), einen CMOS-Sensor (CMOS Abk. für Complementary metal-oxide-semiconductor, engl. für "komplementärer / sich ergänzender Metall-Oxid-Halbleiter), einen CCD-Sensor, einen 3D-Sensor, eine Bildaufnahmeeinrichtung auf Röntgen-Basis, ein optisches Element, eine Wärmebildkamera, eine Stereo-Kamera, eine LIDAR-Kamera, ein Geruchssensor und/oder ein (Massen-)Spektrometer, und dergleichen sowie Kombinationen umfasst.

In einer bevorzugten Ausführungsform transportiert die Transporteinrichtung die Behältnisse von einer ersten Behandlungseinrichtung zu einer weiteren (oder zweiten) Behandlungseinrichtung (und/oder ist insbesondere hierfür geeignet und bestimmt).

Bevorzugt ist die erste und/oder die weitere Behandlungseinrichtung ausgewählt aus einer Gruppe, welche eine Spritzgießvorrichtung zum Herstellen eines Spritzgießteils (etwa Vorformlings), eine Reinigungsvorrichtung zum Reinigen der Behältnisse und/oder Behältnisteile, eine Zerkleinerungseinrichtung zum Zerkleinern der Behältnisse, eine Füllvorrichtung zum Füllen der Behältnisse, eine Umformungsvorrichtung zum Umformen eines Kunststoffvorformlings in ein Kunststoffbehältnis, insbesondere eine Blasmaschine, eine Verschließeinrichtung zum Verschließen der Behältnisse, eine Etikettiervorrichtung, eine Markierungseinrichtung, eine Sortiereinrichtung, eine Verpackungseinrichtung (zum Einpacken und/oder Schrumpfverpacken), eine Einrichtung zum Umreifen eines Behältnisteils und/oder Behältnisses, eine Bestimmungseinrichtung zur Bestimmung der Zusammensetzung von Stoffen oder Stoffgemischen, etwa der Atmosphäre und/oder Luft in oder an einem Behältnisteil und bevorzugt Behältnis, beispielsweise ein Massenspektrometer und/oder eine Geruchssensoreinrichtung, und dergleichen sowie Kombinationen hiervon umfasst.

Bevorzugt handelt es sich bei dem Behältnisteil-Strom um einen (insbesondere kontinuierlichen) Strom von (auf dem Transportpfad) sukzessiv bzw. aufeinanderfolgender Behältnisteilen. Beispielsweise kann es sich bei dem Behältnisteil-Strom um einen Behältnisstrom handeln, nämlich einem Strom von (auf dem Transportpfad) sukzessiv bzw. aufeinanderfolgenden Behältnissen. Dabei kann der Behältnisteil-Strom bereichsweise und bevorzugt innerhalb der gesamten Behältnisinspektionsvorrichtung (als Massenstrom) einbahnig oder aber auch mehrbahnig (mittels der Transporteinrichtung) geführt bzw. transportiert werden. Bevorzugt ist wenigstens je eine Sensoreinrichtung einer Bahn des Behältnisteil-Stroms zugeordnet und erfasst jedes auf dieser Bahn befindliche Behältnisteil des Behältnisteil-Stroms.

Bei der Transporteinrichtung kann es sich dabei auch um einen Massentransporteur zum, bevorzugten mehrbahnigen und/oder ungeordneten, Transport einer Vielzahl von Behältnisteilen und bevorzugt von Behältnissen handeln. Bei der Transporteinrichtung kann es sich dabei auch um einen Pufferbereich zum, bevorzugt mehrbahnigen und/oder ungeordneten, Puffern einer Vielzahl von Behältnisteilen und bevorzugt von Behältnissen handeln.

Die Behältnisteile und bevorzugt die Behältnisse können, bevorzugt wenigstens abschnittsweise und bevorzugt entlang in dem gesamten Transportbereich, stehend bzw. aufrecht (von der Transporteinrichtung) transportiert bzw. geführt werden.

Bevorzugt ist die Transporteinrichtung zum wenigstens abschnittsweisen Führen bzw. Transportieren der Vielzahl von Behältnisteilen und bevorzugt von Behältnissen, bevorzugt entlang des gesamten Transportbereichs, von unter Staudruck stehenden Behältnisteilen und bevorzugt Behältnissen geeignet und bestimmt.

Bevorzugt ist die Transporteinrichtung zum Transportieren und/oder Führen (zumindest innerhalb dem Transportbereich) von mindestens 1 Behältnisteil (und bevorzugt mindestens ein Behältnis) pro Stunde, bevorzugt mindestens 5000 (insbesondere zu inspizierende) Behältnisteile (und bevorzugt Behältnisse) pro Stunde, bevorzugt mindestens 20.000 (insbesondere zu inspizierende) Behältnisteile (und bevorzugt Behältnisse) pro Stunde, bevorzugt mindestens 100.000 (insbesondere zu inspizierende) Behältnisteile (und bevorzugt Behältnisse), bevorzugt mindestens 140.000 (insbesondere zu inspizierende) Behältnisteile (und bevorzugt Behältnisse) und besonders bevorzugt mindestens 180.000 (insbesondere zu inspizierende) Behältnisteile (und bevorzugt Behältnisse) geeignet und bestimmt und nimmt dies innerhalb des Arbeitsbetriebs der Behandlungseinrichtung und/oder Behältnisbehandlungsanlage vor. Bevorzugt ist die Transporteinrichtung zum Transportieren und/oder Führen (zumindest innerhalb dem Transportbereich) von höchstens 180.000 (besonders bevorzugt höchstens 200.000), insbesondere zu inspizierenden, Behältnisteilen (und bevorzugt Behältnissen) pro Stunde geeignet und bestimmt und nimmt dies innerhalb des Arbeitsbetriebs der Behandlungseinrichtung und/oder der Behältnisbehandlungsanlage und/oder der Behältnisinspektionsvorrichtung vor.

Bevorzugt ist die Transporteinrichtung in einem einbahnigen Transportbereich zum Transportieren und/oder Führen (zumindest innerhalb dem einbahnigen Transportbereich) von mindestens 100.000 Behältnisteilen (und bevorzugt Behältnissen) pro Stunde und/oder bis zu 180.000 (besonders bevorzugt höchstens 200.000) Behältnisteilen (und bevorzugt Behältnissen) pro Stunde geeignet und bestimmt und nimmt dies innerhalb des Arbeitsbetriebs der Behandlungseinrichtung und/oder der Behältnisbehandlungsanlage und/oder der Behältnisinspektionsvorrichtung vor.

Bei den Behältnissen kann es sich um Vorformlinge handeln, aus welchen durch einen Umformvorgang fertig ausgeformte Behältnisse hergestellt werden und/oder welche bisher nur durch einen Urformschritt hergestellt sind. Bei den Behältnissen kann es sich auch um bereits fertig ausgeformte Behältnisse handeln, welche beispielsweise durch einen Umformvorgang eines Vorformlings (etwa eines Spritzgussteils bzw. eines Spritzlings) ihre fertige Ausformung erreicht haben.

Bei den Behältnissen kann es sich um leere, noch zu befüllende und/oder zu recycelnde und/oder wieder zu befüllende Behältnisse handeln. Bei den Behältnissen kann es sich auch um befüllte Behältnisse handeln. Zusätzlich oder alternativ kann es sich bei den Behältnissen um mit (insbesondere genau) einem Behältnisverschluss verschlossene und/oder verschließbare Behältnisse handeln.

Bei den Behältnissen kann es sich um Einwegbehältnisse oder um Mehrwegbehältnissen handeln.

Bei den Behältnissen handelt es sich bevorzugt um (bevorzugt dichte), insbesondere verschließbare, Behältnisse zur Aufnahme von Flüssigkeiten und/oder fließfähigen Substanzen, etwa pastöse und/oder cremeartige und/oder gelartige Substanzen, wie etwa aus dem Lebensmittelbereich, aus der Kosmetikindustrie oder aus dem pharmazeutischen Bereich.

Denkbar ist auch, dass es sich bei den Behältnissen um Behältnisse zur Aufnahme von Flüssigkeiten und/oder Körpern handelt, wie etwa für Behältnisse zur Aufnahme von Kontaktlinsen.

Bevorzugt handelt es sich bei der externen Speichereinrichtung um eine Cloud-basierte (bevorzugt nicht-flüchtigen) Speichereinrichtung und/oder einen externen Server (inkl. Speichereinrichtung), wobei auf die Speichereinrichtung insbesondere über das Internet (und/oder über ein, insbesondere wenigstens abschnittsweise drahtgebundenes und/oder drahtloses, öffentliches und/oder privates Netzwerk) zugegriffen wird. Unter einem externen Server ist insbesondere ein in Bezug auf eine Behältnisinspektionsvorrichtung und/oder Echtzeit-Auswertungseinrichtung und/oder Einstelleinrichtung externer Server, insbesondere ein Backend-Server, zu verstehen.

Der externe Server ist beispielsweise ein Backend insbesondere eines Behältnisinspektionsvorrichtungs-Herstellers oder eines Dienstanbieters, welcher dazu eingerichtet ist, ortsaufgelöste Sensordaten (insbesondere einer Vielzahl von Sensoreinrichtungen und/oder einer Vielzahl von Behältnisinspektionsvorrichtungen) zu verwalten und/oder maschinelle Lernverfahren in Bezug auf durchzuführende (Trainings-)Behältnisinspektionsverfahren durchzuführen und/oder Behältnisinspektionsvorrichtungen einzustellen und/oder anzupassen. Die Funktionen des Backend bzw. des externen Servers können dabei auf (externen) Serverfarmen durchgeführt werden. Beim (externen) Server kann es sich um ein verteiltes System handeln.

Die vorliegende Erfindung ist weiter gerichtet auf ein, insbesondere Computer-implementiertes, Verfahren zur Ermittlung, insbesondere zur Merkmalsextraktion, eines Satzes von Behältnisteilmerkmalen zur Verwendung in einer Behältnisinspektionsvorrichtung zur Durchführung einer Behältnisinspektionsaufgabe, umfassend die Schritte:
- Bereitstellen einer Trainings-Behältnisinspektionsaufgabe;
- Bereitstellen eines Trainingsdatensatzes umfassend eine Vielzahl von Sensordaten in Bezug auf eine Vielzahl von Behältnisteilen für Behältnisse und umfassend jeweils ein Label, welches ein beabsichtigtes Ergebnis der Trainings-Behältnisinspektionsaufgabe angibt;
- Durchführen eines, bevorzugt überwachten, maschinellen Lernverfahrens auf Grundlage des Trainingsdatensatzes in Hinblick auf die Trainings-Behältnisinspektionsaufgabe;
- Extraktion der in dem maschinellen Lernverfahren erhaltenen Behältnisteil-Merkmale. Die Merkmalsextraktion kann von dem Algorithmus des maschinellen Lernverfahrens als erste Verarbeitungsstufe durchgeführt werden. Sie stellt eine vorteilhafte Möglichkeit dar, die Verarbeitungseffizienz deutlich zu verbessern und den Einfluss irrelevanter Informationen zu reduzieren. Dabei wird die Merkmalsextraktion automatisch während der Trainingsphase des maschinellen Lernverfahrens gelernt.

Das maschinelle Lernverfahren kann dabei von einem (insbesondere tiefen) neuronalen Netzwerk, etwa einem "Convolutional Neural Networks" (CNN) durchgeführt werden. Diese lernen etwa während des gesamten Trainingsprozesses (etwa in einem Computer-Vision-Verfahren als Behältnisinspektionsaufgabe) automatisch, aus (Roh-)Sensordaten sinnvolle Merkmale wie Kanten, Formen und Texturen zu extrahieren.

Dabei ist bevorzugt die Trainings-Behältnisinspektionsaufgabe von einer an der Behältnisinspektionsvorrichtung zu erfüllenden und/oder durchzuführenden Behältnisinspektionsaufgabe verschieden. Die Behältnisteil-Merkmale werden bevorzugt bei einem maschinellen Lernverfahren bzw. bei Vornahme eines maschinellen Lernverfahrens extrahiert, welches in Bezug auf eine Trainings-Behältnisinspektionsaufgabe durchgeführt wird. Mit der Durchführung des maschinellen Lernverfahrens soll ein (trainierter) Algorithmus bzw. ein (trainiertes) Modell (maschinellen Lernens) erhalten werden, welches zur Erfüllung bzw. zur Durchführung der Trainings-Behältnisinspektionsaufgabe dient.

Bevorzugt handelt es sich bei dem Satz von extrahierten Behältnisteil-Merkmalen um einen, im Rahmen des in Bezug auf die Trainings-Behältnisinspektionsaufgabe durchgeführten maschinellen Lernverfahrens (automatisch) extrahierten Satz von (extrahierten) Behältnisteil-Merkmalen.

Dass ein von der Behältnisinspektionsaufgabe verschiedene Trainings-Behältnisinspektionsaufgabe verwendet werden kann, bietet den Vorteil, dass zur Merkmalsextraktion lediglich ein einziger Trainingsprozess bzw. ein einziges maschinelles Lernverfahren, nämlich der im Rahmen zur Trainings-Behältnisinspektionsaufgabe durchgeführte Trainingsprozess bzw. maschinelle Lernverfahren, ausreichend ist. Die hier erhaltenen extrahierten Behältnisteil-Merkmale werden sodann für andere Behältnisinspektionsaufgaben verwendet.

Beispielsweise können die extrahierten Merkmalsvektoren einer Flasche in einem (Kamera- )Bild in mehreren Inspektionsaufgaben/ Klassifikationen verwendet werden.

Beispiel für zwei Inspektionsaufgaben/Klassifikationen:
1. Zeigen die Merkmalsvektoren eine braune Flasche?
2. Zeigen die Merkmalsvektoren eine verschlossene Flasche?

Beides ist in einem Bild und damit auch in dem extrahierten Merkmalsvektor erkennbar. Im ersten Fall wird der Algorithmus maschinellen Lernens, etwa kNN, dann mit Merkmalsvektoren von braunen und andersfarbigen Flaschen "trainiert". Im zweiten Fall mit Merkmalsvektoren von verschlossenen und unverschlossenen Flaschen.

Die Merkmale müssen nur einmal aus jedem Bild extrahiert werden.

Bei einem bevorzugten Verfahren werden in dem Trainingsprozess bzw. dem maschinellen Lernverfahren Trainingsdaten verwendet, welche eine von der wenigstens einen Sensoreinrichtung erfasste Vielzahl von, insbesondere ortsaufgelösten, Sensordaten (von Behältnissen) umfassen. Dies bietet den Vorteil, dass bereits der Trainingsprozess spezifisch auf die einzustellende Behältnisinspektionsvorrichtung abgestimmt wird und beispielsweise damit spezifische Gegebenheiten der spezifischen Behältnisinspektionsvorrichtung, wie optische Eigenschaften der Sensoreinrichtung oder auch spezifische Lichtverhältnisse in der Behältnisinspektionsvorrichtung, unmittelbar berücksichtigt werden können.

Bevorzugt sind/werden die zur Verwendung als Trainingsdaten vorgesehenen (von der wenigstens einen Sensoreinrichtung erfassten), insbesondere ortsaufgelösten, Sensordaten mit (Behältnis-)Sorten- und/oder Klassifikationsmerkmalen (je nach Klassifikationsaufgabe, etwa Klassifikation der Defektart) versehen. Bevorzugt werden die, insbesondere ortsaufgelösten, Sensordaten zusammen mit den jeweils ihnen zugeordneten (Behältnis-)Sorten- und/oder Klassifikationsmerkmalen als Trainingsdatensatz (insbesondere auf der externen und/oder der nicht-flüchtigen Speichereinrichtung) abgelegt. Bevorzugt wird auf diese Weise eine Vielzahl von Trainings-Datensätzen erzeugt. Bei den Klassifikationsmerkmalen kann es sich dabei um die Klassen der Trainings-Behältnisinspektionsaufgabe (bzw. Ergebnisklassen zu den obig beschriebenen Behältnisinspektionsaufgaben) handeln. So können etwa die einem Behältnisteil zugeordneten, insbesondere ortsaufgelösten, Sensordaten mit den darin vorkommenden Defektarten und dergleichen klassifiziert sein.

Das Trainieren der Netze erfordert eine Anzahl von markierten und/oder klassifizierten Sensordaten (beispielsweise Bilder) pro Anwendung der Größenordnung von 1.000 bis 100.000 (beispielsweise 10.000 markierte und/oder klassifizierte Bilder pro Anwendung). Diese Markierung und/oder Klassifizierung kann lokal oder zentral von Bildverarbeitungs-Experten erfolgen.

Bevorzugt ist (zusätzlich oder alternativ), dass als Trainingsdaten, (bevorzugt ausschließlich) insbesondere ortsaufgelöste, Sensordaten von Behältnisteilen (oder hiervon abgeleitete Daten) verwendet werden, die von einer Sensoreinrichtung (wenigstens) einer anderen, bevorzugt baugleichen, Behältnisinspektionsvorrichtung (bevorzugt desselben Herstellers) erfasst wurden. Dies bietet den Vorteil, dass hierdurch eine große Vielzahl an Sensordaten noch vor einer Inbetriebnahme der Behältnisinspektionsanlage bereitgestellt und verwendet werden kann.

Denkbar ist auch, dass als Trainingsdaten (ausschließlich oder teilweise) synthetisch erzeugte oder via Augmentierung (engl. data augmentation) erzeugte ortsaufgelöste Sensordaten (oder hiervon abgeleitete Daten) verwendet werden. Dies bietet den Vorteil, dass etwa selten auftretende Klassen von Defektarten hierdurch simuliert und das Modell maschinellen Lernens hiermit in effizienter Weise trainiert werden kann.

Bevorzugt erfolgt das Training bzw. das maschinelle Lernverfahren mittels überwachtem Lernen. Es wäre jedoch auch möglich, das maschinelle Lernverfahren mittels unbeaufsichtigtem Lernen, bestärkendem Lernen oder stochastischem Lernen zu trainieren.

Bevorzugt werden die extrahierten Behältnisteil-Merkmale einer Behältnisinspektionsvorrichtung bzw. einer Echtzeit-Auswertungseinrichtung einer Behältnisinspektionsvorrichtung (wie obig beschrieben) bereitgestellt und/oder übermittelt.

Bevorzugt wird das Verfahren an einem in Bezug auf die Behältnisbehandlungsanlage externen Server durchgeführt und/oder der Satz extrahierter Behältnisteil-Merkmale auf einem in Bezug auf die Behältnisbehandlungsanlage externen Speichereinrichtung abgelegt. Bevorzugt ist der abgelegte Satz extrahierter Behältnisteil-Merkmale (nach Freigabe) von dem Betreiber der Behältnisbehandlungsanlage abrufbar.

Bei einem vorteilhaften Verfahren wird die Anzahl der zu extrahierenden Behältsteilmerkmale des Satzes von Behältnisteilmerkmalen vorgegeben.

Der Trainingsprozess bzw. das maschinelle Lernverfahren kann dabei lokal (bei der Behältnisinspektionsvorrichtung) und/oder zentral und/oder örtlich unabhängig und/oder auf einem externen Server in Bezug auf die Behältnisinspektionsvorrichtung und/oder die Behältnisbehandlungsanlage vorgenommen werden.

Bei einem vorteilhaften Verfahren wird das maschinelle Lernverfahren und/oder die Merkmalsextraktion örtlich getrennt von der Behältnisbehandlungsanlage durchgeführt, insbesondere außerhalb eines Betriebsgeländes der Behältnisbehandlungsanlage.

Bevorzugt wird der in dem vorgeschlagenen Verfahren erhaltene Satz von extrahierten Behältnisteil-Merkmalen in dem obig gemäß einem bevorzugten Ausführungsform vorgeschlagenen Verfahren zum Betreiben einer Behältnisbehandlungsanlage verwendet.

Die vorliegende Erfindung ist weiterhin gerichtet auf eine Behältnisinspektionsvorrichtung, für eine Behältnisbehandlungsanlage zur Behandlung einer Vielzahl von Behältnisteilen für Behältnisse und bevorzugt für Kunststoffbehältnisse und/oder Flaschen. Dabei ist die Behältnisinspektionsvorrichtung zur Durchführung einer Behältnisinspektionsaufgabe in der Behältnisbehandlungsanlage geeignet, bestimmt und/oder konfiguriert.

Bevorzugt weist die Behältnisbehandlungsanlage eine Transporteinrichtung auf, welche dazu geeignet und bestimmt ist, die Vielzahl von Behältnisteilen als Behältnisteil-Strom entlang eines vorgegebenen Transportpfads von wenigstens einer Behandlungseinrichtung der Behältnisbehandlungsanlage zu wenigstens einer weiteren Behandlungseinrichtung der Behältnisbehandlungsanlage zu transportieren.

Dabei weist die Behältnisinspektionsvorrichtung wenigstens eine Sensoreinrichtung auf, welche zur Durchführung der Behältnisinspektionsaufgabe dazu geeignet und bestimmt ist, insbesondere ortsaufgelöste, Sensordaten und bevorzugt Kamerabilder in Bezug auf die Behältnisteile, bevorzugt optisch, zu erfassen.

Erfindungsgemäß ist die Behältnisinspektionsvorrichtung dazu geeignet und bestimmt, in Bezug auf die erfassten, insbesondere ortsaufgelösten, Sensordaten eine Ablegegröße zu ermitteln, welche charakteristisch ist für eine Ablege-Anweisung zum Ablegen der erfassten, insbesondere ortsaufgelösten, Sensordaten auf einer, bevorzugt nicht-flüchtigen, Speichereinrichtung. Dabei kann "nicht-flüchtig" wie obig beschrieben verstanden werden.

Dabei wird die Ablegegröße basierend auf einer Ähnlichkeitsgröße ermittelt, welche für eine Ähnlichkeit der erfassten, insbesondere ortsaufgelösten, Sensordaten zu vorgegebenen und/oder vorgebbaren Referenzdaten charakteristisch ist.

Es wird also auch im Rahmen der erfindungsgemäßen vorgeschlagen, dass auf Grundlage einer Sensordaten-Ähnlichkeit Sensordaten in einer Speichereinrichtung abgelegt werden. Insbesondere können auch hier mithilfe einer obig beschriebenen Al-basierten Ähnlichkeitsmetrik (basierend auf dem Satz von extrahierten Behältnisteil-Merkmalen) eine Ähnlichkeit zu den Referenz-Sensordaten bestimmt werden. Bevorzugt werden nur ähnliche Sensor-daten aufgehoben und gespeichert.

Bevorzugt ist die Behältnisinspektionsvorrichtung dazu eingerichtet, geeignet und/oder bestimmt, das alle bereits obig im Zusammenhang mit der Erfassung der Sensordaten und/oder im Zusammenhang mit den Referenzdaten und/oder im Zusammenhang mit der Ermittlung der Ablegegröße und/oder Ähnlichkeitsgröße beschriebene Verfahrensschritte einzeln oder in Kombination miteinander auszuführen. Umgekehrt kann das Verfahren mit allen im Rahmen der Behältnisinspektionsvorrichtung beschriebenen Merkmalen einzeln oder in Kombination miteinander ausgestattet sein.

Die vorliegende Erfindung ist weiterhin gerichtet auf eine Behältnisbehandlungsanlage zum Behandeln einer Vielzahl von Behältnisteilen für Behältnisse umfassend eine Behältnisinspektionsvorrichtung gemäß einer obig beschriebenen (bevorzugten) Ausführungsform und umfassend eine Behandlungseinrichtung, wenigstens eine weitere Behandlungseinrichtung und eine Transporteinrichtung zum Transportieren der Behältnisteile von der Behandlungseinrichtung zur wenigstens einen weiteren Behandlungseinrichtung.

Bevorzugt ist die Behältnisbehandlungsanlage dazu eingerichtet, geeignet und/oder bestimmt, das obig beschriebene Verfahren zum Betreiben einer Behältnisbehandlungsanlage sowie alle bereits obig im Zusammenhang mit dem Verfahren beschriebene Verfahrensschritte einzeln oder in Kombination miteinander auszuführen. Weiter kann die Behältnisbehandlungsanlage und/oder die Behandlungseinrichtung und/oder die wenigstens eine weitere Behandlungseinrichtung und/oder die Transporteinrichtung wenigstens ein obig beschriebenes Merkmal einzeln oder in Kombination mit weiteren Merkmalen aufweisen bzw. ausgestattet sein.

Die vorliegende Erfindung ist weiterhin gerichtet auf ein Computerprogramm oder Computerprogrammprodukt, umfassend Programmmittel, insbesondere einen Programmcode, welcher zumindest einige der und bevorzugt alle Verfahrensschritte des erfindungsgemäßen Verfahrens und bevorzugt eine der beschriebenen bevorzugten Ausführungsformen repräsentiert oder kodiert und zum Ausführen durch eine Prozessoreinrichtung ausgebildet ist.

Die vorliegende Erfindung ist weiterhin gerichtet auf einen Datenspeicher, auf welchem zumindest eine Ausführungsform des erfindungsgemäßen Computerprogramms oder eine bevorzugte Ausführungsform des Computerprogramms gespeichert ist.

Die vorliegende Erfindung wurde in Bezug auf ein Behältnis bzw. Behältnisteile für Behältnisse beschrieben. Dabei ist die vorliegende Erfindung auch übertragbar auf Spritzgussteile (Spritzlinge) oder allgemein auf in einer Behandlungsanlage zu behandelnde Artikel (etwa herzustellende und/oder zu verpackende Kontaktlinsen), deren Behandlungsfortschritt und/oder deren Eigenschaften und/oder (Defekt-/Qualitäts-)Zustände durch wenigstens eine Sensoreinrichtungen (zur Erfassung von insbesondere ortsaufgelösten Sensordaten in Bezug auf jeden einzelnen zu inspizierenden Artikel) kontrolliert wird. Die Anmelderin behält sich vor, hierauf gerichtete Gegenstände ebenfalls zu beanspruchen.

Die vorliegende Erfindung ist weiterhin gerichtet auf ein Verfahren zum Betreiben einer Artikelbehandlungsanlage zur Behandlung einer Vielzahl von Spritzlingen und/oder Artikel, wobei eine Transporteinrichtung die Vielzahl von Spritzlingen und/oder Artikel als Teile-Strom entlang eines vorgegebenen Transportpfads von wenigstens einer Behandlungseinrichtung der Artikelbehandlungsanlage zu wenigstens einer weiteren Behandlungseinrichtung der Artikelbehandlungsanlage transportiert.

Dabei erfasst wenigstens eine Sensoreinrichtung zur Durchführung einer Artikelinspektionsaufgabe, insbesondere ortsaufgelöste, Sensordaten und bevorzugt Kamerabilder in Bezug auf die Spritzlinge und/oder Artikel, bevorzugt optisch.

Erfindungsgemäß wird in Bezug auf die erfassten, insbesondere ortsaufgelösten, Sensordaten eine Ablegegröße ermittelt, welche charakteristisch ist für eine Ablege-Anweisung zum Ablegen der erfassten, insbesondere ortsaufgelösten, Sensordaten auf einer nicht-flüchtigen Speichereinrichtung, wobei die Ablegegröße basierend auf einer Ähnlichkeitsgröße ermittelt wird, welche für eine Ähnlichkeit der erfassten, insbesondere ortsaufgelösten, Sensordaten zu vorgegebenen und/oder vorgebbaren Referenzdaten charakteristisch ist.

Die Erfindung ist weiterhin gerichtet auf eine Artikelinspektionsvorrichtung, für eine Artikelbehandlungsanlage zur Behandlung einer Vielzahl von Spritzlingen und/oder Artikeln, zur Durchführung einer Artikelinspektionsaufgabe in der Artikelbehandlungsanlage, wobei die Artikelbehandlungsanlage eine Transporteinrichtung aufweist, welche dazu geeignet und bestimmt ist, die Vielzahl von Spritzlingen und/oder Artikel als Teile-Strom entlang eines vorgegebenen Transportpfads von wenigstens einer Behandlungseinrichtung der Artikelbehandlungsanlage zu wenigstens einer weiteren Behandlungseinrichtung der Artikelbehandlungsanlage zu transportieren.

Dabei weist die Artikelinspektionsvorrichtung wenigstens eine Sensoreinrichtung auf, welche zur Durchführung der Artikelinspektionsaufgabe dazu geeignet und bestimmt ist, insbesondere ortsaufgelöste, Sensordaten und bevorzugt Kamerabilder in Bezug auf die Spritzlinge und/oder Artikel, bevorzugt optisch, zu erfassen.

Erfindungsgemäß ist die Artikelinspektionsvorrichtung dazu geeignet und bestimmt, in Bezug auf die erfassten, insbesondere ortsaufgelösten, Sensordaten eine Ablegegröße zu ermitteln, welche charakteristisch ist für eine Ablege-Anweisung zum Ablegen der erfassten, insbesondere ortsaufgelösten, Sensordaten auf einer nicht-flüchtigen Speichereinrichtung, wobei die Ablegegröße basierend auf einer Ähnlichkeitsgröße ermittelt wird, welche für eine Ähnlichkeit der erfassten, insbesondere ortsaufgelösten, Sensordaten zu vorgegebenen und/oder vorgebbaren Referenzdaten charakteristisch ist.

Die weiteren obig im Rahmen der Behältnisteile beschriebenen Merkmale sind entsprechend analog auf die Spritzlinge und/oder Artikel anwendbar.

Weitere Vorteile und Ausführungsformen ergeben sich aus der beigefügten Zeichnung:
Darin zeigen:
- Fig. 1: eine schematische Darstellung einer erfindungsgemäßen Behältnisbehandlungsanlage gemäß einer bevorzugten Ausführungsform; und
- Fig. 2: Kamerabilder zur Veranschaulichung des erfindungsgemäßen Verfahrens gemäß einer bevorzugten Ausführungsform.

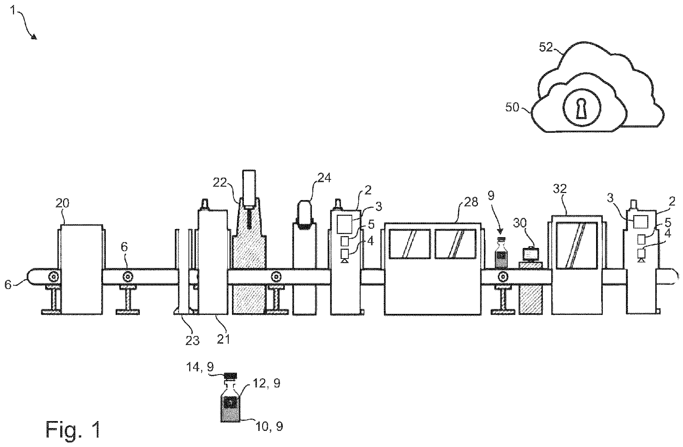

Fig. 1 zeigt eine schematische Darstellung einer erfindungsgemäßen Behältnisbehandlungsanlage 1 zum Behandeln von Behältnisteilen 10, hier als Flaschen ausgebildete Behältnisse 10, gemäß einer ersten Ausführungsform.

Das Bezugszeichen 12 kennzeichnet eine an dem Behältnisteil 10, hier einem Behältnis, angeordnete Ausstattung. In dem in Fig. 1 dargestellten Ausführungsbeispiel ist als Ausstattung ein Identifikationsmittel beispielhaft gezeigt, welches an der Flasche 10 angeordnet ist. Dabei handelt es sich beispielsweise um einen (aufgedruckten) QR-Code. Das Bezugszeichen 14 kennzeichnet einen Behältnisverschluss als eine weitere Ausstattung des Behältnisses 10.

In der in Fig. 1 gezeigten Ausführungsform wird ein Kunststoffvorformling bereitgestellt und von der Transporteinrichtung 6 einer Erwärmungsvorrichtung 20 zugeführt, in dieser erwärmt und im Anschluss in einer Blasformvorrichtung als weitere Behandlungseinrichtung, deren Anordnung innerhalb der Behältnisbehandlungsanlage 1 durch das Bezugszeichen 23 gekennzeichnet ist, zu einer (Kunststoff-)Flasche 10 expandiert. Diese Flasche 10 kann beispielsweise durch die Individualisierungseinrichtung, etwa einer Druckeinrichtung, mit einem Identifikationsmittel 12 versehen sein, wodurch eine Flasche, welche ein Identifikationsmittel 12 aufweist, entsteht.

Das Behältnisteil 9 kann in der Behältnisbehandlungsanlage 1 von wenigstens einer Transporteinrichtung 6 von einer Behandlungseinrichtung zur nächsten, sowie auch innerhalb der Behandlungseinrichtung(en) transportiert werden. Dargestellt sind hier als Behandlungseinrichtungen (in einer Reihenfolge stromabwärts der Transportrichtung der Flasche) eine Inspektionsvorrichtung 21, eine Füllvorrichtung 22 zum Befüllen der Flasche 10 mit einem Produkt, eine Verschließvorrichtung 24, eine Trocknungsvorrichtung 28, eine Etikettiervorrichtung 30 sowie eine Verpackungseinrichtung 32 zum Verpacken der Flasche 10.

Die Bezugszeichen 2 kennzeichnet jeweils eine weitere Behältnisinspektionsvorrichtung (etwa am Ende der Linie und zwischen der Verschließeinrichtung 24 und der Trocknungseinrichtung 28 angeordnet), welche beispielsweise eine Füllhöhe in der Flasche und/oder eine ordnungsgemäße Anordnung des Verschlusses auf der Flasche 10 und/oder einen Sicherungsring und/oder eine ordnungsgemäße Etikettierung und/oder Verpackung der Flasche 10 oder weitere Produktionsdaten überprüft.

Das Bezugszeichen 4 kennzeichnet jeweils eine Sensoreinrichtung, hier einer Kamera, mittels welcher - individuell zu jedem (zu inspizierenden) Behältnisteil 9 - Sensordaten in Bezug auf das jeweilige Behältnisteil 9 erhoben bzw. erfasst bzw. aufgenommen werden.

Das Bezugszeichen 3 kennzeichnet jeweils eine Echtzeit-Auswertungseinrichtung, mittels welcher die von der Sensoreinrichtung 4 der jeweiligen Behältnisinspektionsvorrichtung 2 erfassten Sensordaten zur Durchführung einer (vorgegebenen und/oder festgelegten) Behältnisinspektionsaufgabe ausgewertet werden.

Bei einem bevorzugt vorgeschlagenen Verfahren wird zur Auswertung ein Satz extrahierter Merkmale zur Bewertung der erfassten Sensordaten verwendet. Der verwendete Satz extrahierter Merkmale ist das Ergebnis einer (trainierten) Merkmalsextraktion, welche durch ein neuronales Netz, das mit (umfangreichen) (Trainings-)Daten auf ähnliche (Inspektions-)Aufgaben der Bild-Klassifikation vortrainiert wurde. Im letzten Schritt der Bewertung der extrahierten Merkmale wird dann jedoch ein klassisches Klassifikationsverfahren angewendet.

Das Bezugszeichen 50 kennzeichnet einen internen Server bzw. eine interne Speichereinrichtung und das Bezugszeichen 52 einen externen Server bzw. eine externe, insbesondere Cloud-basierte, Speichereinrichtung. Auf dem externen Server 52 kann beispielsweise die Al-basierte Merkmalsextraktion vorgenommen werden. Auf der externen und/oder der internen Speichereinrichtung 50/52 kann bevorzugt der erhaltene Satz extrahierter Behältnisteil-Merkmale abgelegt werden.

Das Bezugszeichen 5 kennzeichnet eine Speichereinrichtung, welche hier (fester) Bestandteil der Behältnisinspektionsvorrichtung 2 ist. Auf dieser Speichereinrichtung 2 können von der Sensoreinrichtung 4 erfasste Sensordaten abgelegt werden.

Bevorzugt ist eine Keep-Strategie/Bildspeicherfunktion vorgesehen, die auf Grund einer Bildähnlichkeit Bilder auf der Speichereinrichtung 5 und/oder in der Kamera 4 und/oder in einem Festspeicher aufheben kann. Als Referenz kann beispielsweise ein Bild des gesuchten Fehlers bzw. Merkmals verwendet werden. Mit Hilfe einer bevorzugt Al-basierten Ähnlichkeitsmetrik kann die Ähnlichkeit zum Referenzbild bestimmt werden. Aufgehoben und gespeichert werden bevorzugt nur ähnliche Bilder.

Bevorzugt kann die Behältnisinspektionsvorrichtung 2 eine Ähnlichkeitsgröße ermitteln, welche für eine Ähnlichkeit der erfassten Bilder bzw. Sensordaten zu vorgegebenen und/oder vorgebbaren Referenzdaten (wie einem Referenz-Bild) charakteristisch ist. In Abhängigkeit von der ermittelten Ähnlichkeitsgröße kann eine Ablegegröße (etwa durch die Behältnisinspektionsvorrichtung) ermittelt werden, welche charakteristisch ist, ob die erfassten Sensordaten auf der Speichereinrichtung 5 abzulegen sind oder nicht.

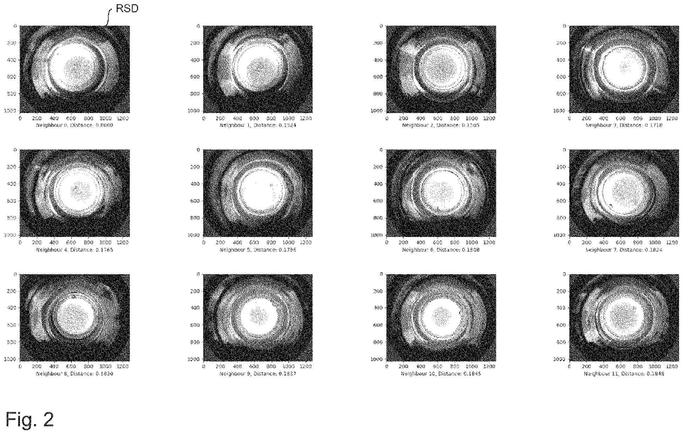

Figur 2 zeigt zwölf Kamerabilder zur Veranschaulichung des erfindungsgemäßen Verfahrens gemäß einer bevorzugten Ausführungsform.

Insbesondere wurden die (sowie weitere nicht dargestellte Kamerabilder) zur Bewertung einer Ähnlichkeit verwendet. Fig. 2 zeigt ein Ergebnis der entsprechend ihrer Ähnlichkeit (mit nach absteigender Ähnlichkeit) sortierten Kamerabildern.

Diese Kamerabilder werden im Rahmen einer Bodeninspektion eines Behältnisses von einer Kamera aufgenommen, welche durch die Mündung des Behältnisses hindurch den Boden des Behältnisses inspiziert. Dabei wird der Boden in einem Durchlichtverfahren von einer Beleuchtungseinrichtung beleuchtet.

Das erste Bild, in der Figurenebene der Fig. 2 links oben, welches mit dem Bezugszeichen RSD gekennzeichnet ist, wird dabei als Referenz-Bild verwendet. Dieses weist somit den mittels (etwa einer euklidischen) Abstandsmetrik ermittelten Abstand 0 zu sich selbst auf.

Die weiteren in Fig. 2 gezeigten Kamerabilder sind entsprechend dem jeweiligen in Bezug auf die Abstandsmetrik ermittelten Abstand zu dem Referenz-Bild sortiert (von links nach rechts, dann von oben nach unten), und zeigen damit einen steigenden Abstand, also eine abnehmende Ähnlichkeit.

Das letzte Kamerabild, in der Figurenebene rechts unten angeordnet, hat den im Vergleich zu den anderen in Fig. 2 gezeigten Kamerabildern höchsten Abstand mit einem Abstand von 0,1848 und ist somit der elfte Nachbar des Referenz-Bildes.

Anhand dieser Kamerabilder lässt sich die hohe Leistung des vorgeschlagenen Verfahrens veranschaulichen. Das Referenzbild RSD zeigt einen Behältnisboden mit einem Embossing "BA". Die von dem vorgeschlagenen Verfahren hierzu am ähnlichsten bewerteten Kamerabilde, nämlich der 1. Nachbar ("Neighbour 1") und der 2. Nachbar ("Neighbour 2"), zeigen (mit abnehmender Deutlichkeit) ebenfalls noch ein solches Embossing "BA". Der 3. Nachbar ("Neighbour 3") zeigt mittig einen Tropfen, welcher ebenfalls eine ähnlich runde Form wie eine Innenkontur des "B" aufweist.

Fig. 2 zeigt, dass durch das vorgeschlagene Verfahren, eine Bewertung einer Ähnlichkeit mittels einer Abstandsmetrik in einem Merkmalsraum (wobei der Merkmalsraum durch, in einem Al basierten Trainingsverfahren extrahierten Merkmale aufgespannt ist), in welchem die Bilder jeweils als Merkmalsvektoren dargestellt werden, vorzunehmen, erreicht werden kann, dass alle Behältnisböden mit dem Embossing "BA" unter den nächsten vier Nachbarn sortiert werden können. Bleiben etwa stets die zehn ähnlichsten Behältnisboden-Kamerabilder in der Speichereinrichtung abgelegt, so wären die drei in dem Behältnisstrom vorhandenen Behältnisböden mit Embossing "BA" innerhalb dieser Speichereinrichtung abgelegt und könnten vom Bediener abgerufen werden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Behältnisbehandlungsanlage
- 2, 21: Behältnisinspektionsvorrichtung
- 3: Echtzeit-Auswertungseinrichtung
- 4: Sensoreinrichtung
- 5: Speichereinrichtung
- 6: Transporteinrichtung
- 10: Behältnis
- 9: Behältnisteil
- 12: Ausstattung, Direktdruckelement
- 14: Ausstattung, Behältnisverschluss
- 20: Behandlungseinrichtung, hier Erwärmungseinrichtung
- 23: Behandlungseinrichtung, hier Druckeinrichtung
- 22: Behandlungseinrichtung, hier Fülleinrichtung
- 24: Behandlungseinrichtung, hier Verschließeinrichtung
- 28: Behandlungseinrichtung, hier Trocknungseinrichtung
- 30: Behandlungseinrichtung, hier Etikettiereinrichtung
- 32: Behandlungseinrichtung, hier Verpackungseinrichtung
- 50: interner Server, Speichereinrichtung
- 52: externer Server Speichereinrichtung
- RSD: Referenz-Sensordaten

## Patentansprüche

1. Verfahren zum Betreiben einer Behältnisbehandlungsanlage (1) zur Behandlung einer Vielzahl von Behältnisteilen (9) für Behältnisse (10) und bevorzugt für Kunststoffbehältnisse und/oder Flaschen, wobei eine Transporteinrichtung (6) die Vielzahl von Behältnisteilen (9) als Behältnisteil-Strom entlang eines vorgegebenen Transportpfads von wenigstens einer Behandlungseinrichtung (20, 23, 22, 24, 28, 30) der Behältnisbehandlungsanlage (1) zu wenigstens einer weiteren Behandlungseinrichtung (23, 22, 24, 28, 30, 32) der Behältnisbehandlungsanlage (1) transportiert, wobei wenigstens eine Sensoreinrichtung (4) zur Durchführung einer Behältnisinspektionsaufgabe, insbesondere ortsaufgelöste, Sensordaten und bevorzugt Kamerabilder in Bezug auf die Behältnisteile (9), bevorzugt optisch, erfasst,
**dadurch gekennzeichnet, dass**
in Bezug auf die erfassten, insbesondere ortsaufgelösten, Sensordaten eine Ablegegröße ermittelt wird, welche charakteristisch ist für eine Ablege-Anweisung zum Ablegen der erfassten, insbesondere ortsaufgelösten, Sensordaten auf einer nicht-flüchtigen Speichereinrichtung (5), wobei die Ablegegröße basierend auf einer Ähnlichkeitsgröße ermittelt wird, welche für eine Ähnlichkeit der erfassten, insbesondere ortsaufgelösten, Sensordaten zu vorgegebenen und/oder vorgebbaren Referenzdaten charakteristisch ist.

2. Verfahren nach Anspruch 1, wobei es sich bei den Referenzdaten um von einer Sensoreinrichtung erfasste, insbesondere ortsaufgelöste, Referenz-Sensordaten handelt.

3. Verfahren nach einem der vorangegangenen Ansprüche, **dadurch gekennzeichnet, dass** die Ähnlichkeitsgröße charakteristisch ist für eine Ähnlichkeit der erfassten, insbesondere ortsaufgelösten, Sensordaten zu einer vorgegebenen und/oder vorgebbaren Vielzahl von, insbesondere ortsaufgelöste, Referenz-Sensordaten.

4. Verfahren nach einem der vorangegangenen Ansprüche, **dadurch gekennzeichnet, dass** die Referenzdaten, bevorzugt die insbesondere ortsaufgelösten Referenz-Sensordaten und/oder die Vielzahl von insbesondere ortsaufgelösten Referenz-Sensordaten, von einem Bediener der Behältnisbehandlungsanlage (1), bevorzugt mittels einer Mensch-Maschinen-Schnittstelle der Behältnisbehandlungsanlage (1), vorgegeben werden.

5. Verfahren nach einem der vorangegangenen Ansprüche, **dadurch gekennzeichnet, dass** in Bezug auf die erfassten, insbesondere ortsaufgelösten, Sensordaten eine Ausleitgröße ermittelt wird, welche für eine Ausleitanweisung zum Ausleiten des zugehörigen Behältnisteils (9) aus dem Behältnisteil-Strom charakteristisch ist, wobei die Ähnlichkeitsgröße unabhängig von der getroffenen Ausleitentscheidung ermittelt wird.

6. Verfahren nach einem der vorangegangenen Ansprüche, **dadurch gekennzeichnet, dass** als Referenz-Sensordaten in Bezug auf wenigstens ein ausgeleitetes und/oder auszuleitendes Behältnisteil (9) erfasste, insbesondere ortsaufgelöste, Sensordaten verwendet werden.

7. Verfahren nach einem der vorhergehenden Ansprüche, **dadurch gekennzeichnet, dass** eine für eine positive Ablege-Anweisung charakteristische Ablegegröße ermittelt wird, sofern eine vergleichsweise hohe Ähnlichkeit der erfassten, insbesondere ortsaufgelösten, Sensordaten zu vorgegebenen und/oder vorgebbaren Referenzdaten ermittelt ist und/oder wird.

8. Verfahren nach einem der vorhergehenden Ansprüche, **dadurch gekennzeichnet, dass** eine Vielzahl von Referenz-Sensordaten vorgegeben ist und eine für eine positive Ablege-Anweisung charakteristische Ablegegröße ermittelt wird, sofern eine vergleichsweise geringe Ähnlichkeit der erfassten, insbesondere ortsaufgelösten, Sensordaten zu der vorgegebenen Vielzahl von Referenz-Sensordaten ermittelt ist und/oder wird.

9. Verfahren nach einem der vorangegangenen Ansprüche, **dadurch gekennzeichnet, dass** die vorgegebene Vielzahl von Referenz-Sensordaten sowohl Referenz-Sensordaten in Bezug auf aus dem Behältnisteil-Strom auszuleitende Behältnisteile (9) als auch in Bezug auf aus dem Behältnisteil-Strom nicht-auszuleitende Behältnisteile (9) umfasst.

10. Verfahren nach einem der vorangegangenen Ansprüche, **dadurch gekennzeichnet, dass** ein Satz von Behältnisteil-Merkmalen vorgegeben ist, auf Grundlage welchem die Ähnlichkeitsgröße ermittelt wird.

11. Verfahren nach dem vorangegangenen Anspruch, **dadurch gekennzeichnet, dass** es sich bei dem Satz von Behältnisteil-Merkmalen um einen, im Rahmen eines, in Bezug auf eine Trainings-Behältnisinspektionsaufgabe durchgeführten maschinellen Lernverfahrens automatisch erhaltenen Satz von, insbesondere von einem neuronalen Netz, extrahierten Behältnisteil-Merkmalen handelt und/oder dass es sich bei dem Satz von Behältnisteil-Merkmalen um einen im Rahmen eines überwachten Lernverfahrens Satz von extrahierten Behältnisteil-Merkmalen handelt, wobei es sich bei dem überwachten Lernverfahren bevorzugt um einen K-nächste-Nachbarn-Algorithmus handelt.

12. Verfahren nach dem vorangegangenen Anspruch, **dadurch gekennzeichnet, dass** durch den bereitgestellten Satz von extrahierten Behältnisteil-Merkmalen ein Merkmalsraum aufgespannt wird und/oder ist, und eine Distanzmetrik in Bezug auf den Merkmalsraum bereitgestellt ist und/oder wird, wobei die Distanzmetrik als Ähnlichkeitsmaß zur Beurteilung der Ähnlichkeit zwischen den erfassten, insbesondere ortsaufgelösten, Sensordaten und den Referenzdaten, insbesondere den Referenz-Sensordaten, zur Ermittlung der Ähnlichkeitsgröße verwendet wird.

13. Verfahren nach einem der vorangegangenen Ansprüche, **dadurch gekennzeichnet, dass** es sich bei der Behältnisinspektionsaufgabe um eine Klassifikationsaufgabe handelt, welche ausgewählt ist aus einer Gruppe von Klassifikationsaufgaben, welche eine Klassifikation in defekte und/oder defektfreie Behältnisteile und bevorzugt Behältnisse (gute / schlechte Behältnisse), eine Erkennung und/oder Klassifikation von Defektarten des Behältnisteils und bevorzugt des Behältnisses, eine Erkennung und/oder Klassifikation von verschiedenen Sorten des Behältnisteils und bevorzugt des Behältnisses (etwa, beispielsweise zehn, verschiedene Flaschentypen), eine Erkennung und/oder Klassifikation einer Kontur und/oder Farbe des Behältnisteils und bevorzugt des Behältnisses, eine Erkennung und/oder Klassifikation einer fehlerfreien und/oder fehlerbehafteten Durchführung wenigstens eines, an dem inspizierten Behältnisteil, insbesondere durch die (erste) Behandlungseinrichtung, vorgenommenen Behandlungsschritts, und dergleichen sowie Kombinationen hiervon umfasst.

14. Behältnisinspektionsvorrichtung (2), für eine Behältnisbehandlungsanlage (1) zur Behandlung einer Vielzahl von Behältnisteilen (9) für Behältnisse (10) und bevorzugt für Kunststoffbehältnisse und/oder Flaschen, zur Durchführung einer Behältnisinspektionsaufgabe in der Behältnisbehandlungsanlage (1), wobei die Behältnisbehandlungsanlage (1) eine Transporteinrichtung (6) aufweist, welche dazu geeignet und bestimmt ist, die Vielzahl von Behältnisteilen (9) als Behältnisteil-Strom entlang eines vorgegebenen Transportpfads von wenigstens einer Behandlungseinrichtung (20, 23, 22, 24, 28, 30) der Behältnisbehandlungsanlage (1) zu wenigstens einer weiteren Behandlungseinrichtung (23, 22, 24, 28, 30, 32) der Behältnisbehandlungsanlage (1) zu transportieren, wobei die Behältnisinspektionsvorrichtung (2) wenigstens eine Sensoreinrichtung (4) aufweist, welche zur Durchführung der Behältnisinspektionsaufgabe dazu geeignet und bestimmt ist, insbesondere ortsaufgelöste, Sensordaten und bevorzugt Kamerabilder in Bezug auf die Behältnisteile (9), bevorzugt optisch, zu erfassen,
**dadurch gekennzeichnet, dass**
die Behältnisinspektionsvorrichtung (2) dazu geeignet und bestimmt ist, in Bezug auf die erfassten, insbesondere ortsaufgelösten, Sensordaten eine Ablegegröße zu ermitteln, welche charakteristisch ist für eine Ablege-Anweisung zum Ablegen der erfassten, insbesondere ortsaufgelösten, Sensordaten auf einer nicht-flüchtigen Speichereinrichtung (5), wobei die Ablegegröße basierend auf einer Ähnlichkeitsgröße ermittelt wird, welche für eine Ähnlichkeit der erfassten, insbesondere ortsaufgelösten, Sensordaten zu vorgegebenen und/oder vorgebbaren Referenzdaten charakteristisch ist.

15. Behältnisbehandlungsanlage (1) zur Behandlung einer Vielzahl von Behältnisteilen (9) für Behältnisse (10) und bevorzugt für Kunststoffbehältnisse und/oder Flaschen, umfassend eine Behältnisinspektionsvorrichtung (2) gemäß dem vorhergehenden Anspruch und umfassend eine Behandlungseinrichtung, wenigstens eine weitere Behandlungseinrichtung und eine Transporteinrichtung zum Transportieren der Behältnisteile von der Behandlungseinrichtung zur wenigstens einen weiteren Behandlungseinrichtung.
